(19) Europäisches Patentamt / European Patent Office / Office européen des brevets

(11) **EP 2 871 471 B1**

## (12) EUROPEAN PATENT SPECIFICATION

(45) Date of publication and mention
of the grant of the patent:
**27.02.2019 Bulletin 2019/09**

(51) Int Cl.:
***G01N 27/327*** *(2006.01)*

(21) Application number: **14191852.4**

(22) Date of filing: **05.11.2014**

(54) **Measuring apparatus and measuring method**

Messvorrichtung und Messverfahren

Appareil et procédé de mesure

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2013 JP 2013232089
31.10.2014 JP 2014222563**

(43) Date of publication of application:
**13.05.2015 Bulletin 2015/20**

(73) Proprietor: **ARKRAY, Inc.
Minami-ku
Kyoto-shi
Kyoto 601-8045 (JP)**

(72) Inventors:
• **Fukuda, Kazuo
Kyoto 602-0008 (JP)**
• **Sato, Yoshiharu
Kyoto 602-0008 (JP)**
• **Okami, Akiko
Kyoto 602-0008 (JP)**

(74) Representative: **Hoffmann Eitle
Patent- und Rechtsanwälte PartmbB
Arabellastraße 30
81925 München (DE)**

(56) References cited:
**EP-A1- 2 579 031        WO-A1-2005/045414
US-A1- 2011 139 634      US-B1- 6 638 415**

**Description**

BACKGROUND OF THE INVENTION

1. Field of the Invention

The present invention relates to a technology for measuring a component contained in a sample based on a response obtained by applying a signal to the sample. In particular, the present invention relates to a technology for measuring a component contained in a sample with the use of a reagent.

2. Description of Related Art

Conventional apparatuses and methods have been developed which obtain information on a medically significant component contained in a biological sample (e.g., blood) based on a response obtained by applying a signal to the sample. For example, Patent Document 1 discloses a measuring apparatus including an analytical device (biosensor strip) and a measuring device. The analytical device includes a pair of glucose electrodes for measuring glucose and a pair of hematocrit electrodes for performing a hematocrit correction. The measuring device, to which the analytical device is removably attached, corrects the glucose level (blood glucose level) detected by the glucose electrodes using the hematocrit level detected by the hematocrit electrodes.

In the conventional measuring apparatus, a reagent is dropped on the pair of glucose electrodes, and the glucose level is detected while blood (sample) reacts with the reagent. The pair of hematocrit electrodes and the pair of glucose electrodes are sequentially arranged from the upstream side (inlet side) of a flow path of blood. A separated element is located at the midpoint between the pair of hematocrit electrodes and the pair of glucose electrodes so as not to come into contact with both pairs of the electrodes. This configuration can prevent the reaction with blood in the pair of hematocrit electrodes and the reaction with blood in the pair of glucose electrodes from interfering with each other.

In the conventional measuring apparatus, the separated element is formed of a spacer, and the spacer is sandwiched between two insulating layers so that blood can flow from the inlet to the pair of glucose electrodes. Specifically, in the analytical device, the two insulating layers each have an opening that constitutes the flow path of the blood, and the separated element is located between two openings. Thus, the blood can reach the pair of glucose electrodes.

US 2011/0139634 A1 and EP 0 246 031 A1 disclose an electrochemical biosensing test strip, biosensing meter, biosensor, system and method for analyt measurement incorporating a hematocrit correction, that use a pair of hematocrit electrodes and a pair of glucose electrodes to detect the respective values.

SUMMARY OF THE INVENTION

An object of the present disclosure is to provide an apparatus and a method that can detect a defective analytical device due to the scattering of a reagent.

In order to achieve the above object, a measuring method of the present disclosure is a method for measuring a target component of a biological sample with a reagent according to claim 1. The invention further provides a measuring apparatus according to claim 5.

The present disclosure provides an apparatus and a method that can detect a defective analytical device due to the scattering of a reagent.

BRIEF DESCRIPTION OF THE DRAWINGS

FIG. 1 is a perspective view for explaining a blood glucose level meter and an analytical device of Embodiment 1 of the present invention.
FIG. 2 is a plan view for explaining the analytical device shown in FIG. 1.
FIG. 3 is an enlarged plan view for explaining a configuration of a portion of the analytical device on the blood inlet side.
FIG. 4 is a cross-sectional view taken along the line IV-IV in FIG. 3
FIG. 5 is an enlarged plan view for explaining a configuration of the main portion of the analytical device.
FIG. 6 is a block diagram showing an example of a circuit configuration of the blood glucose level meter shown in FIG. 1.
FIG. 7 is a diagram for explaining an example of a circuit configuration of a second measuring unit shown in FIG. 2.
FIG. 8 is a diagram for explaining an example of the operation of the second measuring unit.
FIG. 9 is a diagram for explaining a specific method for applying the detection signal shown in FIG. 8 in the analytical device.
FIG. 10 is a series of diagrams for explaining a specific example of an electrical response to the detection signal. FIGS. 10A, 10B, and 10C illustrate specific examples of electrical responses when the voltages of the detection signal are 200 mV, 1000 mV, and 1500 mV, respectively.
FIG. 11 is a diagram for explaining a specific example of the application of the measurement signal shown in FIG. 8 by the second measuring unit.
FIG. 12 is a diagram showing an example of the measurement signal and its response signal.
FIG. 13 is a diagram for explaining a form of the measurement signal.
FIG. 14 is a graph showing the relationship between a pulse rise time of the measurement signal and a peak value of the response signal.
FIG. 15 is a graph showing an example in which three types of samples with known hematocrit levels are measured using a stepped waveform shown in FIG. 16.

FIG. 16 is a graph showing an example of the measurement signal having a stepped waveform.

FIG. 17 is a graph showing an example of the response signal when the measurement signal shown in FIG. 16 is applied to a sample with a hematocrit level of 20%.

FIG. 18 is a graph showing an example of the response signal when the input signal shown in FIG. 16 is applied to a sample with a hematocrit level of 40%.

FIG. 19 is a graph showing an example of the response signal when the input signal shown in FIG. 16 is applied to a sample with a hematocrit level of 70%.

FIG. 20 is a diagram for explaining a specific example of an electrical response to the measurement signal when no reagent is scattered on the hematocrit electrodes shown in FIG. 2.

FIG. 21 is a diagram for explaining a specific example of an electrical response to the measurement signal when a reagent is scattered on the hematocrit electrodes.

FIG. 22 is a diagram for explaining a specific example of the relationship between an electrical response to the detection signal and a hematocrit measurement current.

FIG. 23 is a diagram for explaining a specific example of the relationship between an electrical response to the detection signal and a corrected glucose level.

FIG. 24 is a flow chart showing an operation example of the blood glucose level meter.

FIG. 25 is a diagram for explaining an example of a circuit configuration of a second measuring unit of a blood glucose level meter of Embodiment 2 of the present invention.

FIG. 26 is a diagram for explaining a specific method for applying the detection signal in an analytical device of Embodiment 2.

FIG. 27 is a series of diagrams for explaining a specific example of an electrical response to the detection signal in a measuring apparatus of Embodiment 2. FIGS. 27A, 27B, and 27C illustrate specific examples of electrical responses when the voltages of the detection signal are 200 mV, 1000 mV, and 1500 mV, respectively.

DETAILED DESCRIPTION OF THE INVENTION

In using a conventional technology the analytical device such as a biosensor strip as disclosed, e.g., in Patent Document 1, there may be a problem that a defective analytical device cannot be detected. Specifically, a conventional technology analytical device merely includes the separated element that is located between the pair of hematocrit electrodes and the pair of glucose electrodes. Therefore, a reagent dropped on the pair of glucose electrodes may be scattered over the pair of hematocrit electrodes because of a failure due to dropping, a vibration or fall impact of the analytical device during transport, or the storage state of the analytical device. If the reagent is scattered on the pair of hematocrit electrodes, conventional technology cannot detect such a scattering of the reagent. Consequently, conventional technology cannot detect a defective analytical device, and therefore can neither accurately measure the hematocrit level, nor appropriately correct the glucose level.

With the foregoing in mind, it is an object of an embodiment of the present invention to provide an apparatus and a method that can detect a defective analytical device due to the scattering of a reagent.

The above object is achieved by measuring a target component of a biological sample with a reagent. The method includes the following steps of applying a detection signal to at least one test electrode pair; measuring an electrical response to the detection signal in the test electrode pair; and determining the presence or absence of the reagent on the test electrode pair based on the measured electrical response.

An embodiment of the present invention is an apparatus configured to measure a target component of a biological sample with a reagent. The apparatus includes the following: a measuring unit configured to measure an electrical response to a detection signal applied to at least one test electrode pair; and a control unit configured to determine the presence or absence of the reagent on the test electrode pair based on the measured electrical response.

In the above measuring method and measuring apparatus, a detection signal is applied to at least one test electrode pair, and an electrical response to the detection signal is measured. Then, the presence or absence of the reagent on the test electrode pair is determined based on the electrical response. With this configuration, the measuring method and the measuring apparatus can detect a defective analytical device due to the scattering of a reagent.

In the measuring method, it is preferable that the presence or absence of the reagent on the test electrode pair is determined by comparing the measured electrical response with a known value in the step of determining the presence or absence of the reagent.

In this case, the presence or absence of the reagent on the test electrode pair can be accurately determined.

In the measuring method, a current value may be measured as the electrical response to the detection signal in the step of measuring the electrical response.

In this case, the presence or absence of the reagent on the test electrode pair can be easily determined.

The measuring method may include a step of measuring a first biological value by using the test electrode pair either before the step of applying the detection signal or after the step of measuring the electrical response.

In this case, the first biological value can be measured before or after determining the presence or absence of scattering of the regent on the test electrode pair.

In the measuring method, the test electrode pair, which is not provided with the reagent, is used in the step of measuring a first biological value.

In this case, it is possible to measure the first biological value exactly.

The measuring method may include a step of measuring a second biological value by applying a measurement signal to another electrode pair on which the reagent is placed, while the sample reacts with the reagent.

In this case, the second biological value can be obtained.

In the measuring method, it is preferable that the first biological value is a hematocrit level and the second biological value is a glucose level, and that the measuring method further includes a step of correcting the measured glucose level using the measured hematocrit level.

In this case, the glucose level can be accurately determined.

In the measuring apparatus, it is preferable that the control unit determines the presence or absence of the reagent on the test electrode pair by comparing the measured electrical response with a known value.

In this case, the presence or absence of the reagent on the test electrode pair can be accurately determined.

In the measuring apparatus, the measuring unit may measure an electrical response to a measurement signal applied to the test electrode pair, and the control unit may determine a first biological value based on the measured electrical response to the measurement signal.

In this case, the first biological value can be obtained.

The measuring apparatus may further include the following: another measuring unit that measures an electrical response to a measurement signal applied to another electrode pair on which the reagent is placed; and an analytical device that includes the another electrode pair that is located in a flow path of the sample and provided with the reagent, and the test electrode pair that is located in the flow path of the sample and not provided with the reagent.

In this case, the measuring target component of a biological sample can be measured for each analytical device. Thus, many biological samples can be easily measured.

In the measuring apparatus, the another electrode pair and the test electrode pair of the analytical device may be located at positions within the range of a predetermined distance in the same flow path of the sample.

ple.

In this case, the measurement can be performed using both the another electrode pair and the test electrode pair without making the structure of the analytical device large and complicated.

In the measuring apparatus, it is preferable that when the detection signal is applied to the test electrode pair, one electrode of the test electrode pair that is closer to the another electrode pair serves as a working electrode and the other electrode that is further from the another electrode pair serves as a counter electrode.

In this case, the measurement sensitivity of the electrical response to the detection signal can be improved, and the presence or absence of the reagent can be easily determined.

In the measuring apparatus, the control unit may determine a second biological value based on the electrical response to the measurement signal measured by the another measuring unit.

In this case, the second biological value can be obtained.

In the measuring apparatus, it is preferable that the first biological value is a hematocrit level and the second biological value is a glucose level, and that the measuring unit corrects the determined glucose level using the determined hematocrit level.

In this case, the glucose level can be accurately determined.

Hereinafter, preferred embodiments of the measuring apparatus and the measuring method of the present invention will be described with reference to the drawings. In the following description, the present invention is applied to a blood glucose level meter. The dimensions of the constituent members in the drawings are not intended represent the exact dimensions, dimensional ratios, etc. of the actual constituent members.

[Embodiment 1]

(Example of configuration of system)

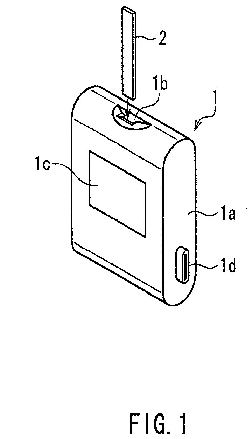

FIG. 1 is a perspective view for explaining a blood glucose level meter and an analytical device of Embodiment 1 of the present invention. In FIG. 1, a blood glucose level meter 1 of this embodiment is a portable measuring apparatus and includes an analytical device 2 and a main body 1a (measuring device), to which the analytical device 2 is movably attached. A patient's blood (sample) is placed (introduced) in the analytical device 2. The analytical device 2 is configured to have the function of a (bio)sensor for detecting a blood glucose level (glucose level) in blood. The blood glucose level meter 1 shown in FIG. 1 can be used, e.g., as a portable blood glucose monitoring (BGM) or a meter for self monitoring of blood glucose (SMBG).

The main body 1a of the blood glucose level meter 1 has an insertion port 1b for receiving the analytical device 2 in the form of a rectangular strip. The main body 1a of the blood glucose level meter 1 also includes a control unit (as will be described later) that may be composed of a microprocessor and controls each unit of the blood glucose level meter 1. Moreover, the main body 1a of the blood glucose level meter 1 includes a measuring unit and a recording unit, as will be described in detail later. The measuring unit supplies a predetermined voltage signal to the analytical device 2, receives a voltage signal indicating the measurement results from the analytical device 2, performs an analog-to-digital conversion of the received voltage signal, and produces measurement data indicating the measured value. The recording unit records the measurement data obtained by the measuring unit. The control unit instructs the recording unit to record the measurement data obtained by the measuring unit in association with the measuring time, the patient's ID, or the like.

Further, the main body 1a of the blood glucose level meter 1 includes a display screen 1c for displaying the measurement data and a connector 1d for data communications with external equipment. The connector 1d transmits and receives various data such as the measurement data, the measuring time, and the patient's ID to and from external equipment including a portable device (e.g., a smartphone) and a personal computer. In other words, the blood glucose level meter 1 can transfer the measurement data, the measuring time, etc. to the external equipment via the connector 1d, and can also receive the patient's ID etc. from the external equipment via the connector 1d and associate the received data with the measurement data etc.

Other than the above description, e.g., the measuring unit may be provided in the end portion of the analytical device 2, and the measurement data may be produced by the analytical device 2. The main body 1a of the blood glucose level meter 1 may also include a user interface, including an input unit such as a keypad or a touch panel, with which a user (e.g., a patient) can input data. Moreover, the display screen 1c, the recording unit, or the like may be provided in an external device that can be connected to the main body 1a of the blood glucose level meter 1, instead of being provided in the main body 1a.

(Example of configuration of analytical device 2)

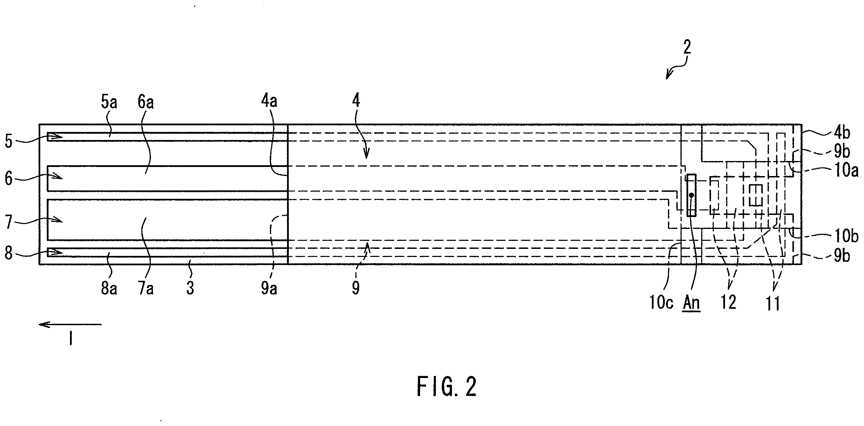

Next, the analytical device 2 of this embodiment will be described in detail with reference to FIGS. 2 to 5.

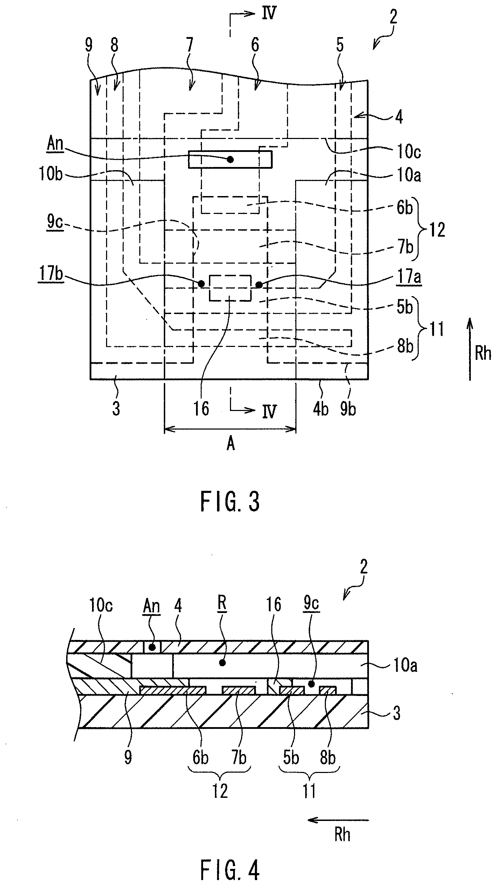

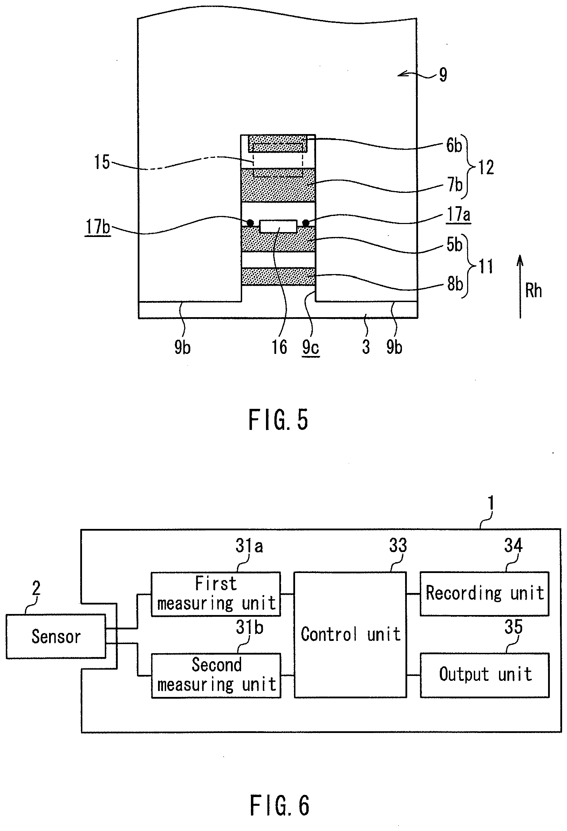

FIG. 2 is a plan view for explaining the analytical device shown in FIG. 1. FIG. 3 is an enlarged plan view for explaining a configuration of a portion of the analytical device on the blood inlet side. FIG. 4 is a cross-sectional view taken along the line IV-IV in FIG. 3. FIG. 5 is an enlarged plan view for explaining a configuration of the main portion of the analytical device.
In FIG. 2, the analytical device 2 of this embodiment includes a substrate 3 and an opposing substrate 4 that faces the substrate 3 with a resist ink 9 interposed between them. An inlet of blood is provided in the right end portion of the analytical device 2 in FIG. 2, as will be described in detail later. The analytical device 2 is inserted into the insertion port 1b (FIG. 1) of the blood glucose level meter 1 in the direction of the arrow "I" in FIG. 2.
The substrate 3 is made of, e.g., a hydrophobic synthetic resin. Four signal lines 5, 6, 7, and 8 are formed on the substrate 3. The signal lines 5, 6, 7, and 8 are made of, e.g., carbon ink and formed in a predetermined pattern on the substrate 3, e.g., by screen printing. The signal lines 5, 6, 7, and 8 have linear wiring portions 5a, 6a, 7a, and 8a, each of which has the same width, and electrode portions 5b, 6b, 7b, and 8b (FIG. 3) that are bent at right angles to the wiring portions 5a, 6a, 7a, and 8a, respectively.
Other than the above description, the signal lines 5, 6, 7, and 8 may be made of, e.g., a metal thin film.
In the analytical device 2, as shown in FIG. 2, the left end portion (insertion portion) of the substrate 3 is not covered with the opposing substrate 4 and the resist ink 9, so that the left end portions of the wiring portions 5a, 6a, 7a, and 8a are exposed. When the analytical device 2 is inserted into the insertion port 1b, the left end portions of the wiring portions 5a, 6a, 7a, and 8a are connected to a connection unit (not shown) that is provided inside the main body 1a of the blood glucose level meter 1 (FIG. 1). Thus, the analytical device 2 can exchange a voltage signal with the blood glucose level meter 1.
As shown in FIG. 2, a pair of hematocrit electrodes 11 and a pair of glucose electrodes 12 are provided in the right end portion (sample inlet portion) of the analytical device 2. Blood is introduced from the inlet, passes through a flow path (as will be described later), and then reaches the hematocrit electrodes 11 and the glucose electrodes 12.
The opposing substrate 4 is made of, e.g., a hydrophobic synthetic resin. The left end 4a (i.e., the end portion on the insertion side) of the opposing substrate 4 is positioned so that the left end portions of the wiring portions 5a, 6a, 7a, and 8a are exposed, as described above. On the other hand, the right end 4b (i.e., the end portion on the sample inlet side) of the opposing substrate 4 is aligned with the right end of the analytical device 2 (i.e., the right end of the substrate 3). Since the opposing substrate 4 has hydrophilicity, blood passing through the flow path can easily reach the pair of glucose electrodes 12 that is located downstream in the inflow direction of the blood. Moreover, the opposing substrate 4 has an air hole (An) that communicates with the flow path. This allows blood (biological sample) to enter the flow path smoothly.
The resist ink 9 contains, e.g., an insulating material such as a thermosetting ink and is formed in a predetermined pattern on the substrate 3 and the signal lines 5, 6, 7, and 8, by, e.g., screen printing. Specifically, the left end 9a of the resist ink 9 is aligned with the left end 4a of the opposing substrate 4. On the other hand, as shown in FIG. 2, the right end 9b of the resist ink 9 is located slightly to the left of the right end 4b of the opposing substrate 4. The resist ink 9 contains an insulating material, and therefore does not have adverse effect on the signal lines 5, 6, 7, and 8 and the measurement accuracy.

Rectangular double-sided adhesive tapes 10a, 10b, and 10c are provided on the resist ink 9 and sandwiched between the opposing substrate 4 and the resist ink 9. The double-sided adhesive tapes 10a, 10b, and 10c are adhesive layers for bonding the substrate 3 and the opposing substrate 4 together. Thus, the substrate 3 and the opposing substrate 4 are bonded together via the resist ink 9 formed on the substrate 3. The double-sided adhesive tape 10c has the same width as the substrate 3, the opposing substrate 4, and the resist ink 9. One end (i.e., the left end in FIG. 2) of the double-sided adhesive tape 10c is aligned with the left end 4a of the opposing substrate 4 and the left end 9a of the resist ink 9. The air hole (An) is provided in the opposing substrate 4 at a position between the other end i.e., the right end in FIG. 2) of the double-sided adhesive tape 10c and the double-sided adhesive tapes 10a, 10b.

Other than the above description, the resist ink 9 may contain, e.g., an ultraviolet curable resin.

As represented by "A" in FIG. 3, the inlet of blood is provided in the lower end portion of the analytical device 2 of this embodiment. The opening of the inlet is defined by the substrate 3, the opposing substrate 4, the resist ink 9, and the double-sided adhesive tapes 10a, 10b. A flow path R of blood is formed in the analytical device 2 from the opening toward the upper side of FIG. 3 (see also FIG. 4). Due to capillary action, blood enters from the inlet in the inflow direction as represented by "Rh" in FIGS. 3 and 4. The air hole (An) is provided in the opposing substrate 4 so as to facilitate the capillary action.

In the analytical device 2 of this embodiment, the substrate 3, the opposing substrate 4, the resist ink (insulating material) 9, and the double-sided adhesive tapes (adhesive layers) 10a, 10b, and 10c constitute the defining elements that define the flow path R of blood (sample). The length of the flow path R may be, e.g., 1.1 to 10 mm, 1.5 to 4.5 mm, or 2 to 4 mm. The width of the flow path R may be, e.g., 1 to 10 mm, 2 to 3.5 mm, or 1.5 to 2.5 mm. The capacity of the flow path R may be, e.g., 0.1 to 10 $\mu$L, 0.15 to 0.5 $\mu$L, or 0.25 to 0.35 $\mu$L.

In the flow path R, as shown in FIGS. 3 to 5, a notch 9c is provided in the resist ink 9. Moreover, in the flow path R, the pair of hematocrit electrodes 11 (test electrode pair) is located upstream (i.e., on the inlet side), and the pair of glucose electrodes 12 (another electrode pair) is located downstream from the pair of hematocrit electrodes 11. In the analytical device 2, the pair of hematocrit electrodes 11 and the pair of glucose electrodes 12 are located at positions within the range of a predetermined distance in the same flow path R of blood (sample). Thus, in this embodiment, the measurement can be performed using both the pair of hematocrit electrodes 11 and the pair of glucose electrodes 12 without making the structure of the analytical device 2 large and complicated.

Specifically, the pair of hematocrit electrodes 11 is substantially formed of portions of the electrode portions 5b, 8b that are exposed to the inside of the notch 9c. In the pair of hematocrit electrodes 11, when blood is in contact with the above portions of the electrode portions 5b, 8b, a voltage signal (measurement signal) is supplied to the signal lines 5, 8 from an alternating voltage (AC) or a direct voltage (DC), so that a hematocrit level can be detected as a first biological value in the blood glucose level meter 1.

In the blood glucose level meter 1 of this embodiment, a detection signal composed of, e.g., a direct voltage signal is applied to the pair of hematocrit electrodes 11 to determine whether a dropped reagent (reagent) is scattered on the pair of hematocrit electrodes 11 (as will be described in detail herein).

The pair of glucose electrodes 12 is substantially formed of portions of the electrode portions 6b, 7b that are exposed to the inside of the notch 9c. As represented by an alternate long and two short dashes line in FIG. 5, a solid dropped reagent 15 is placed on the pair of glucose electrodes 12. In the pair of glucose electrodes 12, when blood comes into contact with the above portions of the electrode portions 6b, 7b and reacts with the dropped reagent (reagent) 15, a voltage signal is supplied to the signal lines 6, 7 from an alternating voltage (AC) or a direct voltage (DC). Thus, the blood glucose level meter 1 can detect a glucose level (blood glucose level) as a second biological value. Then, the blood glucose level meter 1 corrects the detected glucose level using the detected hematocrit level, and treats the corrected glucose level as measurement data.

In the manufacturing process of the analytical device 2, a liquid reagent 15 is dropped on the pair of glucose electrodes 12, e.g., by an apparatus that delivers a constant amount of liquid such as a dispenser before the opposing substrate 4 is bonded with the substrate 3. Subsequently, the dropped reagent 15 is dried and solidified on the glucose electrodes 12. Examples of the dropped reagent 15 include reagents such as oxidoreductase and an electron transfer substance.

As shown in FIG. 5, a dropped reagent restricting element 16 that restricts the dropped reagent 15 in the liquid state is provided in the flow path R between the downstream end portion of the pair of hematocrit electrodes 11 and the upstream end portion of the pair of glucose electrodes 12. The dropped reagent restricting element 16 is formed at the same time as the resist ink (defining element) 9. As shown in FIG. 5, the dropped reagent restricting element 16 is formed on the electrode portion 5b of one of the pair of hematocrit electrodes 11. Specifically, a part of the dropped reagent restricting element 16 overlaps the electrode portion 5b, and the remaining part is arranged between the downstream end portion of the pair of hematocrit electrodes 11 and the upstream end portion of the pair of glucose electrodes 12.

As shown in FIG. 5, the dropped reagent restricting element 16 is located in the central portion of the flow path R in a transverse direction that crosses the inflow direction Rh of blood (e.g., the direction perpendicular to the inflow direction Rh), and two spaces 17a, 17b are provided so as to sandwich the dropped reagent restricting element 16. In other words, the dropped reagent restricting element 16 is formed between the two spaces 17a, 17b in the flow path R.

In the analytical device 2 of this embodiment having the above configuration, the dropped reagent restricting element 16 is provided in the flow path R between the downstream end portion of the pair of hematocrit electrodes 11 (test electrode pair) and the upstream end portion of the pair of glucose electrodes 12 (another electrode pair). Moreover, in the analytical device 2 of this embodiment, the dropped reagent restricting element 16 and the two spaces 17a, 17b are provided in the flow path R in the transverse direction that crosses the inflow direction Rh of blood (sample). Thus, unlike the conventional examples, the analytical device 2 of this embodiment allows blood to sufficiently reach even the pair of glucose electrodes 12 that is located downstream of the flow path R.

In this embodiment, since the dropped reagent restricting element 16 is formed on the pair of hematocrit electrodes 11, a sufficient amount of the reagent 15 can be dropped on the pair of glucose electrodes 12. Moreover, the dropped reagent 15 can be restricted by the dropped reagent restricting element 16. Thus, the dropped reagent restricting element 16 can suppress the movement of the dropped reagent 15 toward the pair of hematocrit electrodes 11.

In this embodiment, the dropped reagent restricting element 16 is formed at the same time as the resist ink (defining element) 9. Therefore, this embodiment easily can provide the analytical device 2 that has a simplified structure and a reduced number of components.

In this embodiment, the dropped reagent restricting element 16 contains an insulating material. Therefore, this embodiment readily can provide the analytical device 2 that is readily manufactured.

In this embodiment, the opposing substrate 4 faces the substrate 3, and the double-sided adhesive tapes (adhesive layers) 10a, 10b, and 10c are used to bond the substrate 3 and the opposing substrate 4 together. The defining elements include the resist ink (insulating material) 9 formed on the substrate 3, the double-sided adhesive tapes 10a, 10b, and 10c, and the opposing substrate 4. Therefore, this embodiment readily can provide the analytical device 2 that is of low cost with a simple structure and a small thickness.

A method for manufacturing the analytical device 2 of this embodiment includes the following: a first electrode pair forming step in which the pair of hematocrit electrodes (first electrode pair) 11 is formed on the substrate 3 and located upstream of the flow path R; a second electrode pair forming step in which the pair of glucose electrodes (second electrode pair) 12 is formed on the substrate 3 and located downstream of the flow path R; and a dropped reagent restricting element forming step in which the dropped reagent restricting element 16 that restricts the dropped reagent 15 is formed in the flow path R between the downstream end portion of the pair of hematocrit electrodes 11 and the upstream end portion of the pair of glucose electrodes 12 so that the two spaces 17a, 17b are created in the transverse direction that crosses the inflow direction Rh of blood (sample). Thus, in the method for manufacturing the analytical device 2 of this embodiment, the dropped reagent restricting element 16 and the two spaces 17a, 17b are formed in the flow path R between the downstream end portion of the pair of hematocrit electrodes 11 and the upstream end portion of the pair of glucose electrodes 12 in the dropped reagent restricting element forming step. Consequently, the method for manufacturing the analytical device 2 of this embodiment provides the analytical device 2 that allows blood to sufficiently reach the pair of glucose electrodes 12 that is located downstream of the flow path R.

In the method for manufacturing the analytical device 2 of this embodiment, since the dropped reagent restricting element 16 is formed on the pair of hematocrit electrodes 11 in the dropped reagent restricting element forming step, a sufficient amount of the reagent 15 can be dropped on the pair of glucose electrodes 12.

In the method for manufacturing the analytical device 2 of this embodiment, the pair of hematocrit electrodes 11 and the pair of glucose electrodes 12 are simultaneously formed on the substrate 3 by screen printing in the first and second electrode pair forming steps. Therefore, in this embodiment, the pair of hematocrit electrodes 11 and the pair of glucose electrodes 12 can be formed with high precision in a short time.

This embodiment uses the analytical device 2 that allows blood (sample) to sufficiently reach the pair of glucose electrodes (second electrode pair) 12 that is located downstream of the flow path R. Therefore, the blood glucose level meter (measuring apparatus) 1 capable of performing a high precision measurement of the blood can be readily provided.

When the above analytical device 2 that includes the pair of glucose electrodes 12, on which a sufficient amount of the dropped reagent (reagent) 15 is placed, and the pair of hematocrit electrodes 11 is used as a sensor for the blood glucose level meter 1 shown in FIG. 1, the measurement accuracy can be further improved. This can ensure the effect of improving the measurement accuracy with simple processing and configuration. The analytical device 2 that can be used in the blood glucose level meter 1 of this embodiment is not, however, limited to the above example.

In the blood glucose level meter 1 of this embodiment, in some cases, the solid dropped reagent 15 provided in the analytical device 2 can come off from the surface of the pair of glucose electrodes 12, pass through the spaces 17a, 17b between the dropped reagent restricting element 16 and the resist ink 9 or go over the dropped reagent restricting element 16, and thus move to the pair of hematocrit electrodes 11 because of a failure due to dropping, a vibration or fall impact of the analytical device 2 during transport, or the storage state of the analytical device 2. That is, the dropped reagent 15 can be scattered on the electrode portions 5b, 8b constituting the pair of hematocrit electrodes 11. If the dropped reagent 15 is scattered on the pair of hematocrit electrodes 11, as described above, the blood glucose level meter 1 of this embodiment can determine the presence or absence of scattering of the dropped reagent (reagent) 15 (the details of which are described herein).

(Example of circuit configuration of measuring apparatus)

Next, a specific circuit configuration of the blood glucose level meter 1 of this embodiment will be described with reference to FIG. 6.

FIG. 6 is a block diagram showing an example of a circuit configuration of the blood glucose level meter shown in FIG. 1.

As shown in FIG. 6, the blood glucose level meter 1 includes a first measuring unit 31a, a second measuring unit 31b, a control unit 33, a recording unit 34, and an output unit 35. The first measuring unit 31a measures a first electrical response to a first signal (measurement signal) applied to the pair of glucose electrodes (another electrode pair) 12 that can come into contact with a sample. The second measuring unit 31b measures a second electrical response to a second signal (measurement signal) applied to the pair of hematocrit electrodes (test electrode pair) 11 that can come into contact with a sample.

The second signal has a waveform in which the value changes from a first level to a second level and then remains at the second level for a certain period of time. The second measuring unit 31b measures the second electrical response to the second signal as a peak value of a response signal with respect to a change in the second signal. Based on the peak value of the response signal measured by the second measuring unit 31b, the control unit 33 corrects the value that indicates the amount of the measuring target component of the sample and is obtained from the first electrical response. The corrected value indicating the amount of the measuring target component may be recorded in the recording unit 34 and displayed on the display screen 1c by the output unit 35.

Moreover, the second measuring unit 31b measures an electrical response to a detection signal applied to the pair of hematocrit electrodes 11. The control unit 33 determines the presence or absence of the dropped reagent 15 on the pair of hematocrit electrodes 11 based on the electrical response to the detection signal. Then, the results of the determination are displayed on the display screen 1c. The second measuring unit 31b is configured, e.g., to measure first the electrical response to the detection signal and then the electrical response to the second signal, as described in detail herein.

The configuration of the blood glucose level meter (measuring apparatus) 1 is not limited to the above portable measuring apparatus. For example, the measuring unit may be connected to a mobile phone, a smartphone, a game console, a personal computer, a server computer, or the like. In this case, the control unit 33 may be composed of a computer of the equipment to which the measuring unit can be connected.

A processor included in the computer of the blood glucose level meter (measuring apparatus) 1 executes a predetermined program, so that the control unit 33 can be achieved. For example, the blood glucose level meter 1 may incorporate a microcontroller. Such a microcontroller may include, e.g., a core processor that constitutes the control unit 33. Embodiments of the present invention include programs that instruct a computer to function as the control unit 33 and a non-transitory recording medium that stores the programs. Moreover, embodiments of the present invention also include a method for executing these programs by a computer.

Based on the instruction from the control unit 33, the first measuring unit 31a applies, e.g., a DC signal as the first signal (measurement signal) to the pair of glucose electrodes 12 in contact with the sample that has reacted with the reagent, and then measures a response signal as the first electrical response. The control unit 33 can determine a value that indicates a glucose concentration (glucose level) based on the value of the response signal.

(Example of circuit configuration of second measuring unit and example of signal application)

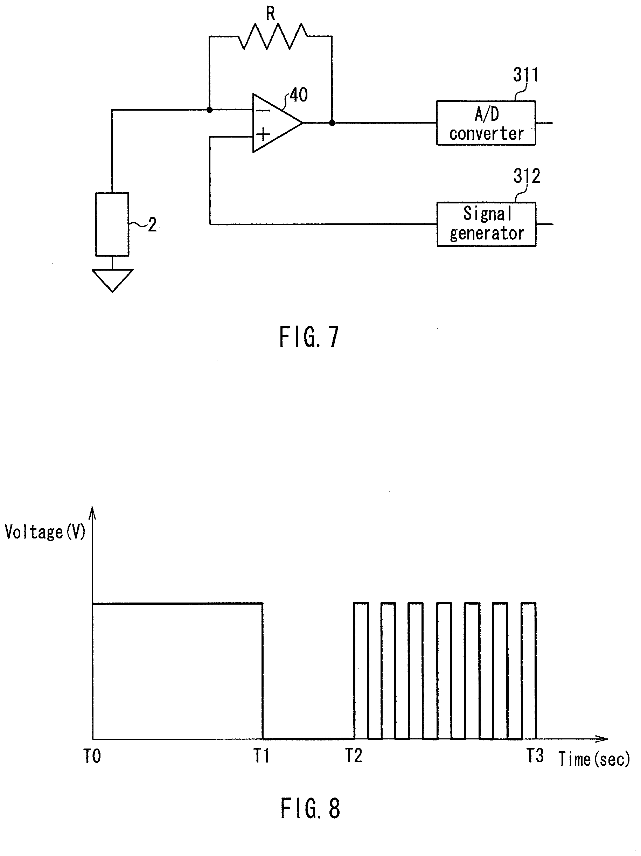

Next, a specific circuit configuration of the second measuring unit 31b and the application of a signal by the second measuring unit 31b will be described with reference to FIGS. 7 and 8.

FIG. 7 is a diagram for explaining an example of a circuit configuration of the second measuring unit shown in FIG. 2. FIG. 8 is a diagram for explaining an example of the operation of the second measuring unit.

As shown in FIG. 7, in the second measuring unit 31b, a signal generator 312 is connected to a positive terminal of an operational amplifier 40, and the second electrode pair of the sensor 2 is connected to a negative terminal of the operational amplifier 40. An output terminal of the operational amplifier 40 is connected to an A/D converter 311. A resistance R is connected between the negative terminal and the output terminal of the operational amplifier 40.

As shown in FIG. 8, the second measuring unit 31b applies the detection signal composed of, e.g., a direct voltage signal to the pair of hematocrit electrodes 11 for the period from a time T0 to a time T1. This makes it possible to determine whether the dropped reagent (reagent) 15 is scattered on the pair of hematocrit electrodes (test electrode pair) 11.

Subsequent to the application of the detection signal, the second measuring unit 31b applies the second signal (measurement signal) composed of, e.g., a pulse wave to the pair of hematocrit electrodes 11 for the period from a time T2 to a time T3. This makes it possible to determine a hematocrit level of blood (biological sample).

(Method for applying detection signal and its electrical response)

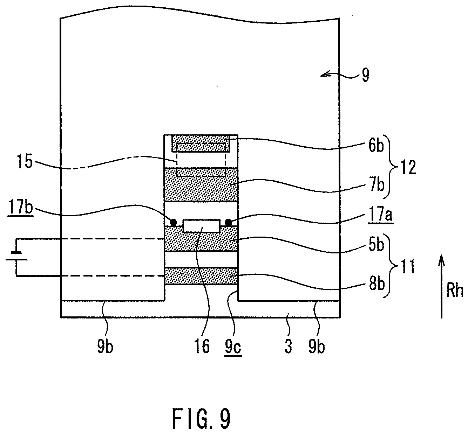

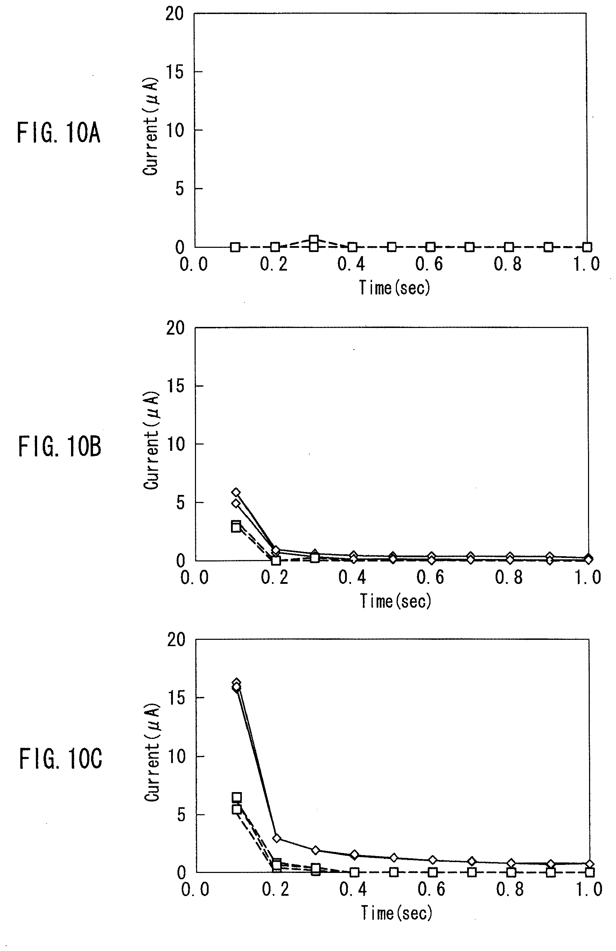

Next, a specific method for applying a detection signal and a specific electrical response to the detection signal in this embodiment will be described with reference to FIGS. 9 and 10.

FIG. 9 is a diagram for explaining a specific method for applying the detection signal shown in FIG. 8 in the analytical device. FIG. 10 is a series of diagrams for explaining a specific example of an electrical response to the detection signal. FIGS. 10A, 10B, and 10C illustrate specific examples of electrical responses when the voltages of the detection signal are 200 mV, 1000 mV, and 1500 mV, respectively.

As shown in FIG. 9, in this embodiment, a positive voltage of the detection signal is applied to the electrode portion 8b, and a negative voltage of the detection signal is applied to the electrode portion 5b. Of the electrode portions 5b, 8b constituting the pair of hematocrit electrodes 11, the electrode portion 8b that is further from the pair of glucose electrodes 12 serves as a working electrode for the detection signal, and the electrode portion 5b that is closer to the pair of glucose electrodes 12 serves as a counter electrode for the detection signal.

If the dropped reagent 15 is scattered on the pair of hematocrit electrodes 11 when the second measuring unit 31b applies the detection signal to the pair of hematocrit electrodes 11 based on the instruction from the control unit 33, a glucose reaction current is generated by the oxidation-reduction reaction of the dropped reagent 15 that reacts with blood. The value of the glucose reaction current varies according to the magnitude of the voltage of the detection signal.

Specifically, if the voltage of the detection signal is set, e.g., to 200 mV, as represented by a dotted line in FIG. 10A, a very small amount of current is detected only in the absence of the dropped reagent 15 on the pair of hematocrit electrodes 11. On the other hand, almost no current is detected in the presence of the dropped reagent 15 on the pair of hematocrit electrodes 11. Therefore, in this embodiment, when the voltage of the detection signal is set to 200 mV, it is difficult to determine the presence or absence of scattering of the dropped reagent 15 on the pair of hematocrit electrodes 11.

If the voltage of the detection signal is set, e.g., to 1000 mV, the current value (represented by a solid line in FIG. 10B) in the presence of the dropped reagent 15 on the pair of hematocrit electrodes 11 is larger than the current value (represented by a dotted line in FIG. 10B) in the absence of the dropped reagent 15 on the pair of hematocrit electrodes 11. Specifically, the current value detected, e.g., 0.1 seconds after the start of the application of the detection signal is about 3 $\mu$A in the absence of the dropped reagent 15 on the pair of hematocrit electrodes 11, but is about 5 $\mu$A in the presence of the dropped reagent 15 on the pair of hematocrit electrodes 11. Therefore, in this embodiment, when the voltage of the detection signal is set to 1000 mV, it is possible to easily determine the presence or absence of scattering of the drooped reagent 15 on the pair of hematocrit electrodes 11 based on the current value (electrical response) detected, e.g., 0.1 seconds after the start of the application of the detection signal, as represented by the dotted line and the solid line in FIG. 10B. More specifically, the control unit 33 compares the current value detected, e.g., 0.1 seconds after the start of the application of the detection signal with a known value (e.g., 4 $\mu$A), and thus can easily and accurately determine the presence or absence of scattering of the dropped reagent 15 on the pair of hematocrit electrodes 11.

The detection sensitivity of the presence or absence of scattering of the dropped reagent 15 can be improved by increasing the voltage of the detection signal. For example, if the voltage of the detection signal is set to 1500 mV, the current value (represented by a solid line in FIG. 10C) in the presence of the dropped reagent 15 on the pair of hematocrit electrodes 11 is even larger than the current value (represented by a dotted line in FIG. 10C) in the absence of the dropped reagent 15 on the pair of hematocrit electrodes 11. Specifically, the current value detected, e.g., 0.1 seconds after the start of the application of the detection signal is about 6 $\mu$A in the absence of the dropped reagent 15 on the pair of hematocrit electrodes 11, but is about 16 $\mu$A in the presence of the dropped reagent 15 on the pair of hematocrit electrodes 11. Therefore, in this embodiment, when the voltage of the detection signal is set to 1500 mV, it is possible to easily determine the presence or absence of scattering of the drooped reagent 15 on the pair of hematocrit electrodes 11 based on the current value (electrical response) detected, e.g., 0.1 seconds after the start of the application of the detection signal, as represented by the dotted line and the solid line in FIG. 10C. More specifically, the control unit 33 compares the current value detected, e.g., 0.1 seconds after the start of the application of the detection signal with a known value (e.g., 10 $\mu$A), and thus can easily and accurately determine the presence or absence of scattering of the dropped reagent 15 on the pair of hematocrit electrodes 11.

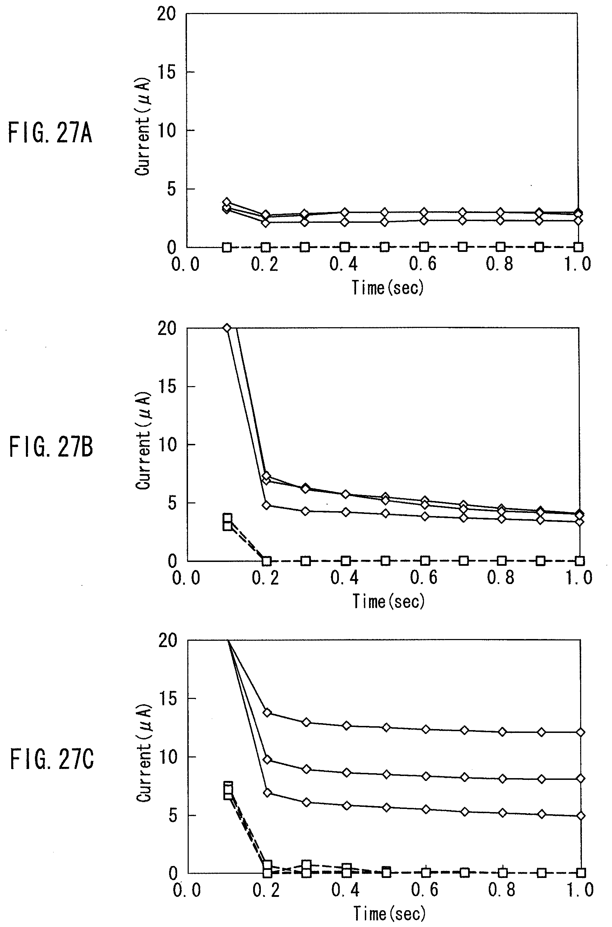

The measurement results of the current values (electrical responses) to the detection signal in FIGS. 10A to 10C are obtained when the sample is blood with a glucose concentration of 336 mg/dL and a hematocrit level of 20% (the same is true for FIGS. 27A to 27C).

(Method for applying second signal (measurement signal) and its electrical response)

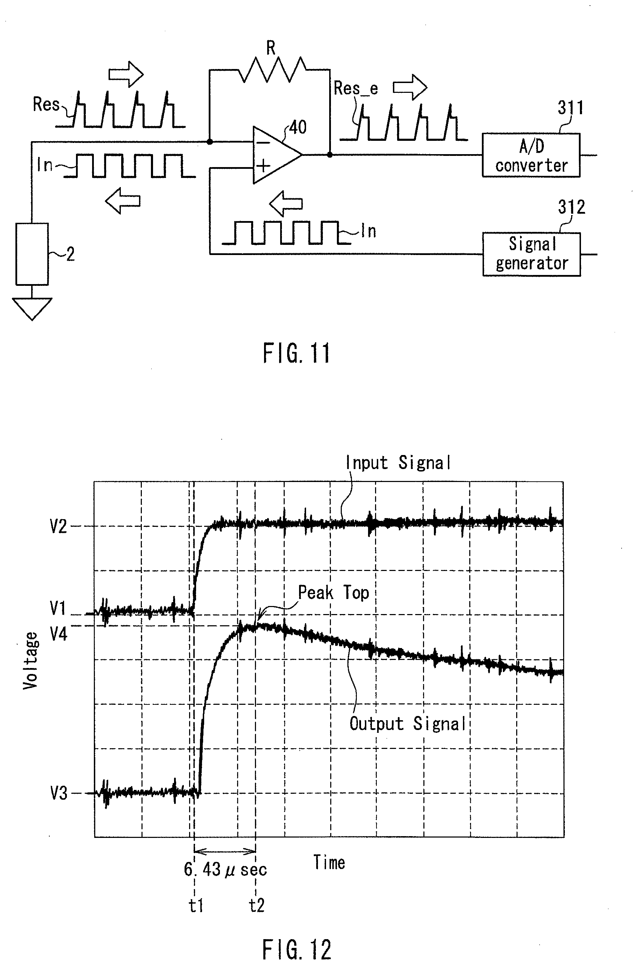

Next, a method for applying the second signal (measurement signal) by the second measuring unit 31b and the electrical response will be described with reference to FIG. 11.

FIG. 11 is a diagram for explaining a specific example of the application of the measurement signal shown in FIG. 8 by the second measuring unit.

In FIG. 11, based on the instruction from the control unit 33, the second measuring unit 31b applies, e.g., a pulse signal having a rectangular or trapezoidal waveform as the second signal (measurement signal) to the hematocrit electrodes 11 in contact with the sample that has not reacted with the reagent. The second measuring unit 31b measures a peak value of a response signal with respect to a change in the signal level of the second signal, e.g., a rise of the pulse. When the peak value of the response signal with respect to a change in the level of the input single is measured, the control unit 33 can use the peak value to determine a value that indicates the amount of hematocrit. Thus, the hematocrit level can be calculated by measuring a peak current derived from an abrupt change in the input signal. Moreover, the control unit 33 can use the hematocrit level to correct the value that indicates the glucose concentration and is obtained from the value of a first response signal to the first signal.

Specifically, as shown in FIG. 11, a pulse wave (input signal) In is input to the positive terminal of the operational amplifier 40, and the pulse wave In (e.g., pulse voltage) is input to the hematocrit electrodes 11 of the analytical device 2. The hematocrit electrodes 11 are in contact with the sample, and a response current Res of the sample is input to the negative terminal of the operational amplifier 40 and converted into a voltage signal Res_e. Then, the voltage signal Res_e is output from the output terminal of the operational amplifier 40. The voltage signal Res_e is converted into a digital signal by the A/D converter 311, and the digital signal is input to the control unit 33. In this case, the peak value either may be detected by a detector (not shown) that is provided between the operational amplifier 40 and the A/D converter 311 or may be calculated by the control unit 33. The signal generator 312 generates an input signal based on the instruction from the control unit 33.

As described above, the second measuring unit 31b can apply to the sample a signal (second signal) having a waveform that includes a portion in which the signal rises to a value and a portion in which the signal remains constant at this value after it has risen. The second measuring unit 31b can also measure the second electrical response of the sample, which has a rectangular wave component or a trapezoidal wave component, based on the peak value of the response signal.

The peak value may be, e.g., the maximum value of the response signal values that are detected in a certain period of time from the point at which the level of the second signal changes (e.g., the point at which the pulse rises). Alternatively, the peak value may be, e.g., a peak value that is held for a certain period of time from the point at which the level of the second signal changes, which is measured by using a circuit for holding a peak value of the response signal for a certain period of time. The magnitude of the peak value can be detected as a difference between the peak level and the level of the response signal before it rises, or a difference between the peak level and the level of the response signal after it has risen and become stable at a constant value. In other words, the peak value can be measured based on the level of the response signal in a stable period before or after the change in the response signal.

The value of the response signal can be measured as a response current value or a response voltage value. In the circuit shown in FIG. 11, e.g., the output of a peak top current is obtained in response to the application of a voltage signal to the electrode pair. The peak value does not necessarily mean exactly the value at the highest point, and can be the maximum value of the discrete values that are detected at predetermined intervals in a certain period of time.

In this embodiment, the peak value can be obtained only by detecting the value of the response signal with respect to at least one change in the level of the input signal. Therefore, e.g., the hematocrit level can be determined in a short time. It is also possible to input a plurality of pulses continuously so that a plurality of peak values of the response signals can be obtained for each of the changes in the signal level. In this case, the accuracy of the peak value can be improved by determining the representative value (e.g., the average value) of the plurality of peak values.

FIG. 12 is a diagram showing an example of the measurement signal (second signal) and its response signal. In the graph shown in FIG. 12, the horizontal axis represents the time and the vertical axis represents the voltage level. In the example of FIG. 12, when the voltage level of the input signal changes from V1 to V2, the voltage level of the output signal also changes abruptly from V3 to V4 and then decreases gradually. For example, the voltage level of the output signal reaches a peak (peak top) 6.43 $\mu$ sec after a time t1 at which the input signal rises (i.e., at which the input signal starts to change).

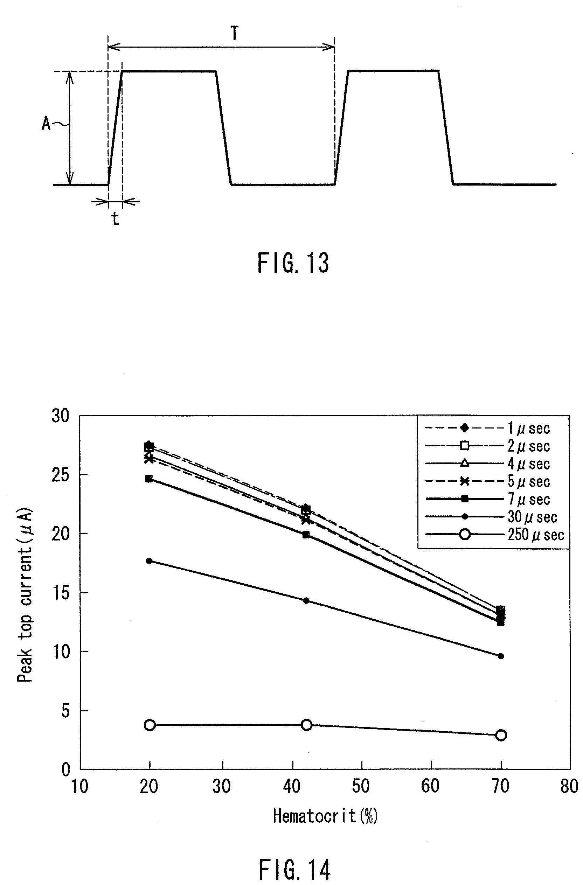

FIG. 13 is a diagram for explaining a form of the measurement signal. FIG. 13 shows a voltage pulse wave as an example of the input signal. In this case, the period T of the pulse wave, the potential difference A between a first level and a second level, and the rise time t (an example of the time it takes for the pulse wave to change from the first level to the second level) can be appropriately set in accordance with the structure of the analytical device 2, the environment of the measurement system, or the like. For example, 1/T may be 1 to 500 [Hz], the rise time t may be less than 30 $\mu$ sec, and the

potential difference A may be 50 to 1000 mV. The hematocrit level can be measured by applying a pulse wave signal as the input signal to the hematocrit electrodes 11 for a maximum of 0.2 seconds. In the example of FIG. 13, the signal to be applied, i.e., the input signal is represented by a voltage. However, the input signal may also be represented by a current. Thus, the input signal can be controlled by controlling either the voltage or the current that is to be applied to the hematocrit electrodes 11.

In the example of FIG. 13, the input signal has a waveform in which the signal rises from a level to a high level, remains at the high level for a certain period of time, and then falls back to the original level. It is also possible to input another signal having a waveform in which the signal falls from a level to a low level, remains at the low level for a certain period of time, and then rises back to the original level. In this case, a peak value of the response signal can be measured with respect to the change in the input signal to the low level or the change in the input signal from the low level to the original level.

The present inventors found that the time required for a change in the level of the input signal (e.g., the rise time) is important to generate a peak value of the response signal with high precision. FIG. 14 is a graph showing the relationship between a pulse rise time of the measurement signal and a peak value of the response signal. This graph shows that, e.g., if the time it takes for the input signal to change from a first level to a second level is 30 μ sec or less than 30 μ sec, a peak value of the response signal can be generated with high precision. If the above time is 7 μ sec or less than 7 μ sec, a peak value of the response signal varies more significantly with the hematocrit level, and thus the peak value can be generated with high precision. It is desirable that the time it takes for the input signal to change from the first level to the second level is 2 μ sec or less than 2 μ sec, so that the magnitude of a peak value can be increased, and the peak value can be obtained with high precision.

There is no particular limitation to the length of time the input signal remains at the second level after it has changed from the first level to the second level. For example, the input signal can remain at the second level for a period of time that is longer than the time it takes for the response signal passes its peak with respect to a change in the input signal and then becomes stable at a constant value. In the case of the pulse wave shown in FIG. 14, the length of time from when the pulse has risen to a level until it falls back to the original level (i.e., the length of time the input signal remains at the second level) can be set to be longer than the time it takes for the response signal passes its peak and stops fluctuating. Thus, the peak value can be reliably detected.

The present inventors found that in order to obtain a peak value, it is important that the level of the input signal changes from a value to another value in a short time, and the input signal does not necessarily have to be a pulse wave that is repeated at a constant period and has a constant potential difference. For example, a signal having a stepped waveform in which the level of the signal changes step by step at intervals can also be applied to the sample.

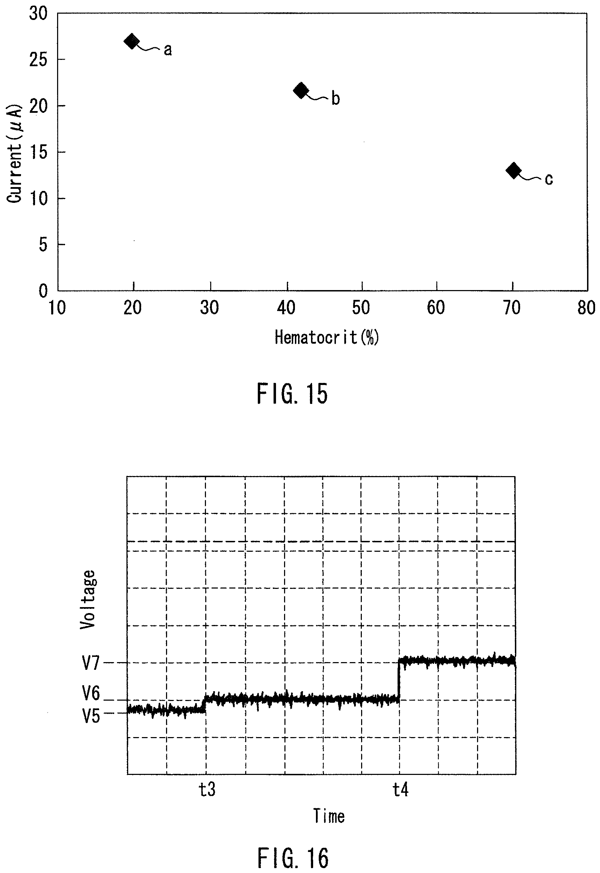

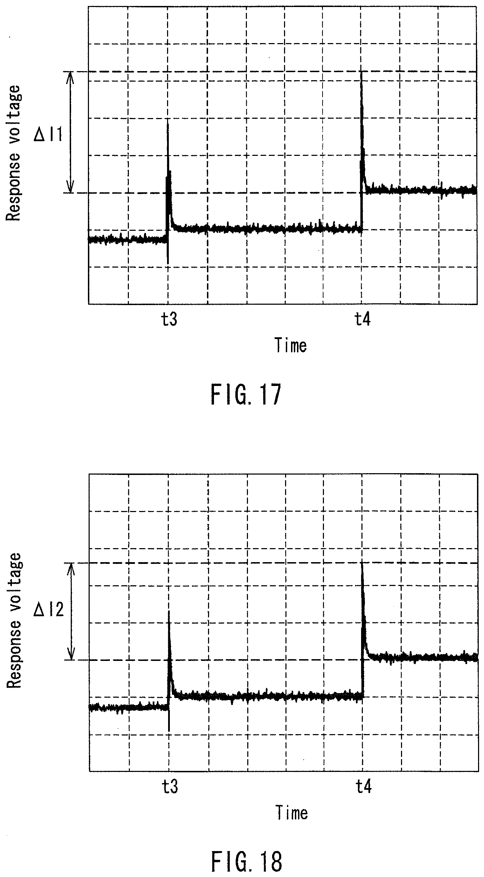

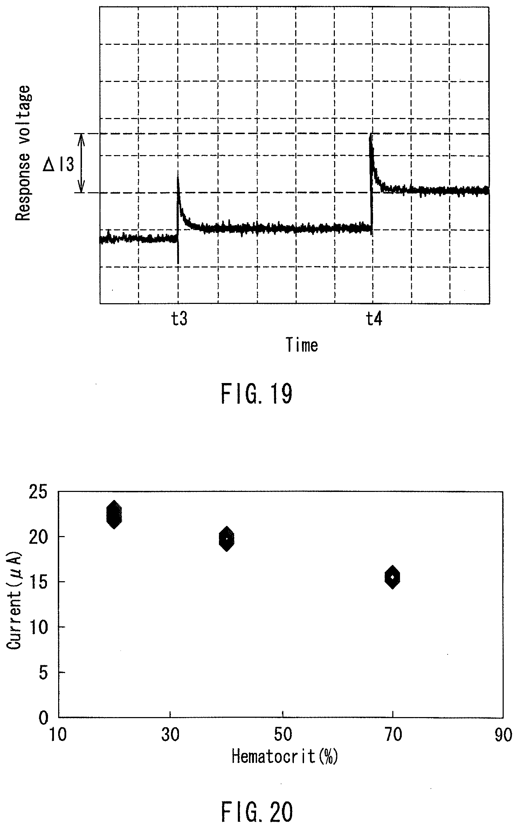

FIG. 15 is a graph showing an example in which three types of samples with known hematocrit levels are measured using a stepped waveform shown in FIG. 16. In the graph shown in FIG. 15, the vertical axis represents the peak value of the response signal and the horizontal axis represents the hematocrit level. As shown in FIG. 16, the level of the input signal rises from V5 to V6 at a time t3, subsequently remains at V6, and then rises from V6 to V7 at a time t4. FIG. 17 is a graph showing an example of the response signal when the input signal shown in FIG. 16 is applied to the sample with a hematocrit level of 20% (i.e., to the hematocrit electrodes that are in contact with the sample). In the example of FIG. 17, a peak value of the response signal with respect to the rise of the input signal at the time t4 is measured as a difference ΔI1 between the peak top and the current value in the subsequent stable period. Similarly, FIG. 18 is a graph showing an example of the response signal when the input signal shown in FIG. 16 is applied to the sample with a hematocrit level of 40%. In the example of FIG. 18, a peak value of the response signal with respect to the rise of the input signal at the time t4 is measured as a difference ΔI2 between the peak top and the current value in the subsequent stable period. FIG. 19 is a graph showing an example of the response signal when the input signal shown in FIG. 16 is applied to the sample with a hematocrit level of 70%. In the example of FIG. 19, a peak value of the response signal with respect to the rise of the input signal at the time t4 is measured as a difference ΔI3 between the peak top and the current value in the subsequent stable period.

In FIG. 15, a plot a corresponds to the peak value ΔI1 of the response signal that rises at the time t4 in FIG. 17, a plot b corresponds to the peak value ΔI2 in FIG. 18, and a plot c corresponds to the peak value ΔI3 in FIG. 19.

(Hematocrit level and glucose level depending on presence or absence of scatting of dropped reagent)

Referring to FIGS. 20 to 23, the measurement results of the hematocrit level and the measurement results (simulation) of the glucose level depending on the presence or absence of scattering of the dropped reagent on the pair of hematocrit electrodes 11 will be described in detail.

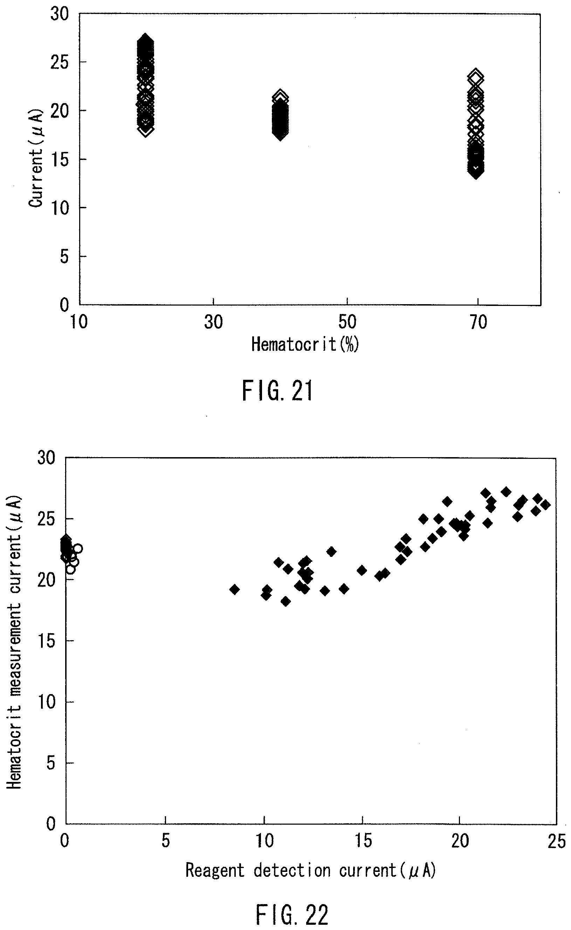

First, an electrical response to the measurement signal (second signal) in the presence and absence of the dropped reagent 15 on the pair of hematocrit electrodes 11 will be described in detail with reference to FIGS. 20 and 21.

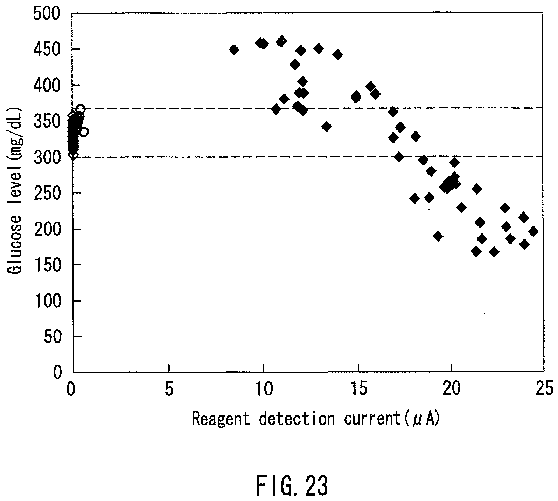

FIG. 20 is a diagram for explaining a specific example of an electrical response to the measurement signal when no reagent is scattered on the hematocrit electrodes shown in FIG. 2. FIG. 21 is a diagram for explaining a specific example of an electrical response to the measurement signal when a reagent is scattered on the hematocrit electrodes. FIG. 22 is a diagram for explaining a specific example of the relationship between an electrical response to the detection signal and a hematocrit measurement current. FIG. 23 is a diagram for explaining a specific example of the relationship between an electrical response to the detection signal and a corrected glucose level.

As shown in FIG. 20, when the dropped reagent 15 is not scattered on the pair of hematocrit electrodes 11, the current value (electrical response) to the measurement signal (second signal), which is measured by the second measuring unit 31b, varies slightly. Specifically, as shown in FIG. 20, when the hematocrit level is 20%, the current value is in the range of about 21 to 24 $\mu$A. When the hematocrit level is 40%, the current value is in the range of about 18 to 21 $\mu$A. When the hematocrit level is 70%, the current value is in the range of about 14 to 17 $\mu$A. Such a small variation in the current value makes it easy for the control unit 33 to determine the hematocrit level.

On the other hand, as shown in FIG. 21, when the dropped reagent 15 is scattered on the pair of hematocrit electrodes 11, since a glucose reaction current is generated by the oxidation-reduction reaction of the dropped reagent 15 that reacts with blood, as in the case of the detection signal, the current value (electrical response) to the measurement signal (second signal) significantly varies. Specifically, as shown in FIG. 21, when the hematocrit level is 20%, the current value is in the range of about 17 to 28 $\mu$A. When the hematocrit level is 40%, the current value is in the range of about 16 to 23 $\mu$A. When the hematocrit level is 70%, the current value is in the range of about 13 to 24 $\mu$A. Such a significant variation in the current value makes it difficult for the control unit 33 to determine the hematocrit level.

Next, the relationship between a reagent detection current, the hematocrit measurement current, and the glucose level will be described in detail with reference to FIGS. 22 and 23. In FIGS. 22 and 23, e.g., blood with a glucose level (concentration) of 336 mg/dL and a hematocrit level of 20% is used.

In FIG. 22, when the dropped reagent 15 is not placed on the pair of glucose electrodes 12 (i.e., the analytical device 2 does not include the dropped reagent 15), as represented by "◇" in FIG. 22, the reagent detection current, i.e., the value of the electrical response to the detection signal is zero, and the hematocrit measurement current, i.e., the value of the electrical response to the measurement signal (second signal) is in the rage of about 22 to 23 $\mu$A.

When the dropped reagent 15 is not scattered on the pair of hematocrit electrodes 11, as represented by "○" in FIG. 22, the reagent detection current is about 1 $\mu$A or less, and the hematocrit measurement current is in the range of about 21 to 23 $\mu$A. Thus, when the

dropped reagent 15 is not scattered on the pair of hematocrit electrodes 11, the analytical device 2 functions as a normal sensor so that it is easy to determine the hematocrit level.

When the dropped reagent 15 is scattered on the pair of hematocrit electrodes 11, as represented by "♦" in FIG. 22, the reagent detection current is in the range of about 9 to 25 $\mu$A, and the hematocrit measurement current is in the range of about 18 to 23 $\mu$A. Thus, when the dropped reagent 15 is scattered on the pair of hematocrit electrodes 11, the analytical device 2 functions as an abnormal sensor so that it is difficult to determine the hematocrit level. In other words, this embodiment confirms that a defective analytical device 2 due to the scattering of the dropped reagent 15 can be detected.

In FIG. 23, when the dropped reagent 15 is not placed on the pair of glucose electrodes 12, as represented by "◇" in FIG. 23, the glucose level that has been corrected using the hematocrit level is in the range of about 300 to 350 mg/dL, which is within tolerance of the glucose level as represented by dotted lines in FIG. 23. Thus, the control unit 33 can determine the glucose level with precision.

When the dropped reagent 15 is not scattered on the pair of hematocrit electrodes 11, as represented by "○" in FIG. 23, the glucose level that has been corrected using the hematocrit level is within tolerance of the glucose level. Thus, even if the dropped reagent 15 is not scattered on the pair of hematocrit electrodes 11, the control unit 33 can almost perfectly determine the glucose level with precision.

When the dropped reagent 15 is scattered on the pair of hematocrit electrodes 11, as represented by "♦" in FIG. 23, the glucose level that has been corrected using the hematocrit level is out of tolerance of the glucose level in many samples. Thus, when the dropped reagent 15 is scattered on the pair of hematocrit electrodes 11, it is difficult for the control unit 33 to accurately determine the glucose level.

(Operation example)

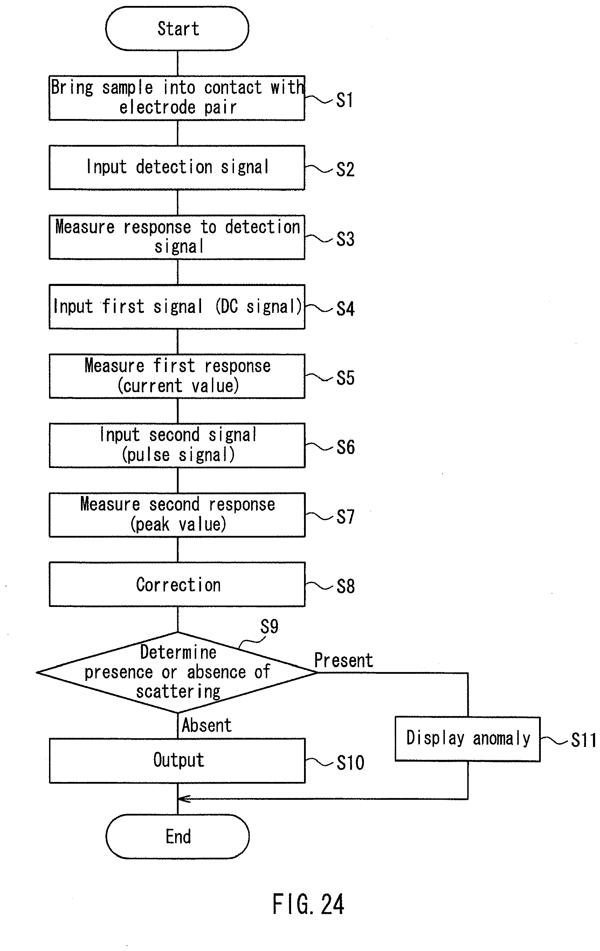

Next, an operation example of the blood glucose level meter 1 of this embodiment will be described in detail with reference to FIG. 24.

FIG. 24 is a flow chart showing an operation example of the blood glucose level meter.

As shown in FIG. 24, in the blood glucose level meter 1 of this embodiment, a measurement is started when a sample comes into contact with the pair of hematocrit electrodes 11 and the pair of glucose electrodes 12 of the analytical device 2 (step S1). For example, the blood glucose level meter 1 can be configured to start working as the analytical device 2 is inserted into the insertion port 1b. In this case, the control unit 33 can start a measurement when it detects the placement of a drop of blood (sample) in the inserted analytical device 2.

The control unit 33 applies a detection signal to the sample (step S2). For example, the control unit 33 instructs the second measuring unit 31b to apply a direct voltage signal (first signal) to the pair of hematocrit electrodes 11.

The second measuring unit 31b measures an electrical response to the detection signal (step S3). For example, the second measuring unit 31b can measure a response current to the direct voltage signal, perform an analog-to-digital conversion of the response current, and transmit the resultant data to the control unit 33.

Next, the control unit 33 applies a first signal (measurement signal) to the sample (step S4). For example, the control unit 33 instructs the first measuring unit 31a to apply a direct voltage signal (first signal) to the pair of glucose electrodes 12. The dropped reagent (reagent) 15 has been previously placed on the pair of glucose electrodes 12, and the sample is in contact with the pair of glucose electrode 12 while it reacts with the dropped reagent 15.

The first measuring unit 31a measures a first electrical response of the sample to the first signal (step S5). For example, the first measuring unit 31a can measure a response current to the direct voltage signal, perform an analog-to-digital conversion of the response current, and transmit the resultant data to the control unit 33.

After receiving the first electrical response of the sample to the first signal, the control unit 33 applies a second signal (measurement signal) to the sample (step S6). For example, the control unit 33 instructs the second measuring unit 31b to apply a pulse signal (second signal) to the pair of hematocrit electrodes 11. The control unit 33 can give the second measuring unit 31b instructions on the rise time, period, magnitude, length of application time, etc. of the pulse signal.

The second measuring unit 31b measures a second electrical response of the sample to the second signal (step S7). For example, the second measuring unit 31b measures a peak value of the response signal with respect to a rise of the pulse of the second signal. The second measuring unit 31b may perform an analog-to-digital conversion of the peak value of the response signal, and transmit the resultant data to the control unit 33. Alternatively, the second measuring unit 31b may perform an analog-to-digital conversion of the value obtained by detecting the response signal at a predetermined period (e.g., 0.1 μsec), and transmit the resultant data to the control unit 33.

The control unit 33 uses the first electrical response obtained in the step S5 and the second electrical response obtained in the step S7 to calculate a value that indicates the amount of the measuring target component of the sample (in this case, e.g., the glucose concentration) (step S8). Thus, based on the peak value of the response signal obtained in the step S7, the control unit 33 can correct the value that indicates the amount of the measuring target component of the sample and is obtained from the first electrical response in the step S5.

For example, in the step S8, the control unit 33 can determine a value that indicates the amount of hematocrit in the sample by using the peak value of the response signal obtained in the step S7. For example, the hematocrit level can be calculated by substituting the peak value into the formula that has been previously recorded. Alternatively, the control unit 33 can determine the hematocrit level by referring to a table in which the peak value of the response signal and the hematocrit level are recorded so as to correspond to each other. The control unit 33 can use the hematocrit level thus determined to correct the value of the glucose concentration that is obtained from the first electrical response. Moreover, the peak value (response current value or response voltage value) may be directly used to correct the glucose level without a conversion from the peak value to the hematocrit level.

An example of a calculation to convert the peak value of the response signal into the hematocrit level will be described below. For example, the hematocrit level can be calculated by substituting the peak value obtained in the step S7 into the following formula (1).

$$Y = aX + b \qquad (1),$$

where Y represents the hematocrit level, X represents the peak value, and a, b represent predetermined coefficients.

The formula is not limited to the above formula (1). For example, a higher order equation can also be used in addition to a linear equation such as the formula (1).

The hematocrit level corresponding to the peak value may be determined by referring to an operation table that has been previously recoded, instead of using the formula.

Next, the control unit 33 determines the presence or absence of scattering of the dropped reagent 15 on the pair of hematocrit electrodes 11 based on the response current to the direct voltage signal (detection signal), which is obtained in the step S3 (step S9). For example, as described with reference to FIG. 10B or 10C, the control unit 33 can determine whether the dropped reagent 15 is scattered on the pair of hematocrit electrodes 11 by comparing a current value that is detected after a predetermined time has elapsed from the start of the application of the detection signal for the above response current with a known value (threshold value) that has been previously set in accordance with the magnitude of the voltage of the detection signal and the elapsed time.

In the step S9, if the control unit 33 determines that the dropped reagent 15 is not scattered on the pair of hematocrit electrodes 11, the value that indicates the amount of the measuring target component (e.g., the value of the glucose concentration), which has been corrected in the step S8, is recorded in the recording unit 34 and displayed on the display screen 1c by the output unit 35 (step S10). The output unit 35 can also transmit the value to other apparatuses via a wire network or a wireless network.

On the other hand, in the step S9, if the control unit 33 determines that the dropped reagent 15 is scattered on the pair of hematocrit electrodes 11, the control unit 33 recognizes that there is an anomaly in the analytical device 2 and allows the anomaly to be displayed on the display screen 1c (step S11).

Other than the above description, if the control unit 33 determines that the dropped reagent 15 is scattered on the pair of hematocrit electrodes 11, e.g., the control unit 33 recognizes that a defective analytical device 2 has been used, and may stop the measurement.

As described above, in the example of FIG. 24, the process of measuring a response to the second signal (steps S6, S7) is performed after the completion of the process of measuring a response to the first signal (steps S4, S5). This is an example in which the first signal and the second signal are applied to a biological fluid for separate periods of time. In this case, it is not necessary to synchronize the first signal and the second signal, so that the processing and configuration of the apparatus can be simplified.

The time required for the step S1 to the step S11 is about 10 seconds, and the order of the step S2 to the step S11 can be appropriately changed, as will be described in detail later.

[Embodiment 2]

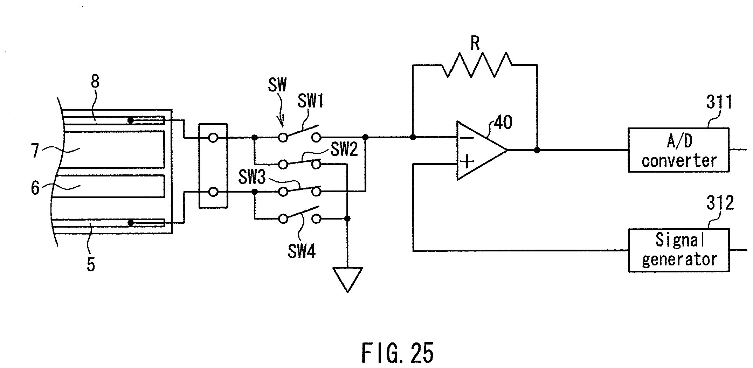

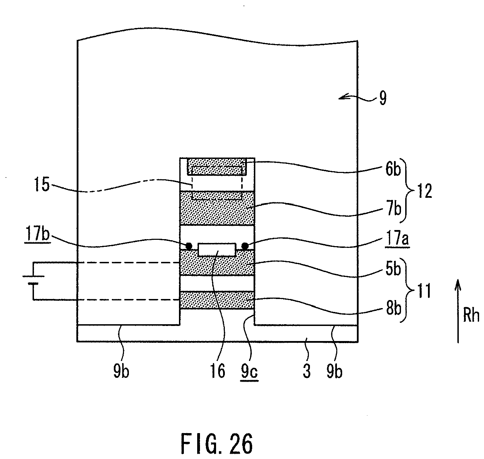

FIG. 25 is a diagram for explaining an example of a circuit configuration of a second measuring unit of a blood glucose level meter of Embodiment 2 of the present invention. FIG. 26 is a diagram for explaining a specific method for applying the detection signal in an analytical device of Embodiment 2.

In FIGS. 25 and 26, this embodiment mainly differs from Embodiment 1 in that when the detection signal is applied to the pair of hematocrit electrodes, one electrode of the pair of hematocrit electrodes that is closer to the pair of glucose electrodes serves as a working electrode and the other electrode that is further from the pair of glucose electrodes serves as a counter electrode. The same components as those of Embodiment 1 are denoted by the same reference numerals, and the explanation will not be repeated.

In FIG. 25, the second measuring unit 31b of this embodiment includes an inverter SW that includes four switching elements SW1 to SW4 and is located on the analytical device 2 side of the operational amplifier 40. Specifically, in the inverter SW, the switching element SW1 is connected between the operational amplifier 40 and the signal line 8, and the switching element SW2 is connected between the signal line 8 and a grounding terminal. The switching element SW3 is connected between the operational amplifier 40 and the signal line 5, and the switching element SW4 is connected between the signal line 5 and the grounding terminal.

In this embodiment, when the second measuring unit 31b applies the direct voltage signal (detection signal), the inverter SW is in the state as shown in FIG. 25 based on the instruction from the control unit 33. In the inverter SW, as shown in FIG. 25, the switching elements SW1, SW4 are in the off state and the switching elements SW2, SW3 are in the on state while the detection signal is applied.

Consequently, in this embodiment, unlike Embodiment 1, a positive voltage of the detection signal is applied to the electrode portion 5b, and a negative voltage of the detection signal is applied to the electrode portion 8b, as shown in FIG. 26. Of the electrode portions 5b, 8b constituting the pair of hematocrit electrodes 11, the electrode portion 5b that is closer to the pair of glucose electrodes 12 serves as a working electrode for the detection signal, and the electrode portion 8b that is further from the pair of glucose electrodes 12 serves as a counter electrode for the detection signal.

Moreover, when the second measuring unit 31b applies the second signal (measurement signal), the inverter SW inverts the states of the switching elements SW1 to SW4 from their previous states shown in FIG. 25 based on the instruction from the control unit 33. In the inverter SW, the switching elements SW1, SW4 are in the on state and the switching elements SW2, SW3 are in the off state while the second signal is applied.

Next, a specific electrical response to the detection signal in this embodiment will be described with reference to FIG. 27.

FIG. 27 is a series of diagrams for explaining a specific example of an electrical response to the detection signal in the measuring apparatus of Embodiment 2. FIGS. 27A, 27B, and 27C illustrate specific examples of electrical responses when the voltages of the detection signal are 200 mV, 1000 mV, and 1500 mV, respectively.

In this embodiment, unlike Embodiment 1, even if the voltage of the detection signal is set, e.g., to 200 mV, it is possible to determine the presence or absence of scattering of the dropped reagent 15 on the pair of hematocrit electrodes 11.

In this embodiment, the current value (represented by a solid line in FIG. 27A) in the presence of the dropped reagent 15 on the pair of hematocrit electrodes 11 is larger than the current value (represented by a dotted line in FIG. 27A) in the absence of the dropped reagent 15 on the pair of hematocrit electrodes 11. Specifically, the current value detected, e.g., 0.1 seconds after the start of the application of the detection signal is 0 $\mu$A in the absence of the dropped reagent 15 on the pair of hematocrit electrodes 11, but is about 3 $\mu$A in the presence of the dropped reagent 15 on the pair of hematocrit electrodes 11. Therefore, in this embodiment, when the voltage of the detection signal is set to 200 mV, it is possible to easily determine the presence or absence of scattering of the drooped reagent 15 on the pair of hematocrit electrodes 11 based on the current value (electrical response) detected, e.g., 0.1 seconds after the start of the application of the detection signal, as represented by the dotted line and the solid line in FIG. 27A. More specifically, the control unit 33 compares the current value detected, e.g., 0.1 seconds after the start of the application of the detection signal with a known value (e.g., 2 $\mu$A), and thus can easily and accurately determine the presence or absence of scattering of the dropped reagent 15 on the pair of hematocrit electrodes 11.

In this embodiment, unlike Embodiment 1, since the electrode portion 5b that is closer to the pair of glucose electrodes 12 serves as a working electrode, even if the voltage of the detection signal is small (e.g., 200 mV), the measurement sensitivity to the detection signal can be improved so that it is possible to determine the presence or absence of scattering of the dropped reagent 15 on the pair of hematocrit electrodes 11. Moreover, this embodiment also confirms that the detection signal and the second signal can have the same voltage (200 mV).

In this embodiment, similarly to Embodiment 1, the detection sensitivity of the presence or absence of scattering of the dropped reagent 15 can be improved by increasing the voltage of the detection signal.

If the voltage of the detection signal is set, e.g., to 1000 mV, the current value (represented by a solid line in FIG. 27B) in the presence of the dropped reagent 15 on the pair of hematocrit electrodes 11 is larger than the current value (represented by a dotted line in FIG. 27B) in the absence of the dropped reagent 15 on the pair of hematocrit electrodes 11. Specifically, the current value detected, e.g., 0.1 seconds after the start of the application of the detection signal is about 3 $\mu$A in the absence of the dropped reagent 15 on the pair of hematocrit electrodes 11, but is more than 20 $\mu$A in the presence of the dropped reagent 15 on the pair of hematocrit electrodes 11. Therefore, in this embodiment, when the voltage of the detection signal is set to 1000 mV, it is possible to easily determine the presence or absence of scattering of the drooped reagent 15 on the pair of hematocrit electrodes 11 based on the current value (electrical response) detected, e.g., 0.1 seconds after the start of the application of the detection signal, as represented by the dotted line and the solid line in FIG. 27B. More specifically, the control unit 33 compares the current value detected, e.g., 0.1 seconds after the start of the application of the detection signal with a known value (e.g., 10 $\mu$A), and thus can easily and accurately determine the presence or absence of scattering of the dropped reagent 15 on the pair of hematocrit electrodes 11.

For example, if the voltage of the detection signal is set to 1500 mV, the current value (represented by a solid line in FIG. 27C) in the presence of the dropped reagent 15 on the pair of hematocrit electrodes 11 is even larger than the current value (represented by a dotted line in FIG. 27C) in the absence of the dropped reagent 15 on the pair of hematocrit electrodes 11. Specifically, the current value detected, e.g., 0.2 seconds after the start of the application of the detection signal is about 1 $\mu$A in the absence of the dropped reagent 15 on the pair of hematocrit electrodes 11, but is more than 8 $\mu$A in the presence of the dropped reagent 15 on the pair of hematocrit electrodes 11. Therefore, in this embodiment, when the voltage of the detection signal is set to 1500 mV, it is possible to easily determine the presence or absence of scattering of the drooped reagent 15 on the pair of hematocrit electrodes 11 based on the current value (electrical response) detected, e.g., 0.2 seconds after the start of the application of the detection signal, as represented by the dotted line and the solid line in FIG. 27C. More specifically, the control unit 33 compares the current value detected, e.g., 0.2 seconds after the start of the application of the detection signal with a known value (e.g., 4 $\mu$A), and thus can easily and accurately determine the presence or absence of scattering of the dropped reagent 15 on the pair of hematocrit electrodes 11.

With the above configuration, this embodiment can have the same effects as those of Embodiment 1. In this embodiment, of the electrode portions 5b, 8b constituting the pair of hematocrit electrodes 11, the electrode portion 5b that is closer to the pair of glucose electrodes 12 serves as a working electrode for the detection signal, and the electrode portion 8b that is further from the pair of glucose electrodes 12 serves as a counter electrode for the detection signal. Thus, this embodiment can improve the measurement sensitivity of the electrical response to the detection signal, and can easily determine the presence or absence of the dropped reagent 15.

The above embodiments are all illustrative and not restrictive. The technical scope of the present invention is defined by the appended claims, and all changes that come within the range of equivalency of the claims are intended to be embraced therein.

For example, in the above description, the blood glucose level meter is used as the measuring apparatus. However, the present invention is not limited thereto, and may use any other measuring apparatuses such as a lactate level measuring device that measures the level of lactic acid or the like in a sample (analyte). Specifically, when the present invention is applied to a lactate level measuring device (lactate sensor), a hematocrit correction may be performed in the same manner as the blood glucose level meter by the following configuration: lactate oxidase (enzyme) is used as a reagent, the test electrode pair is used to measure a hematocrit level (first biological value), and another electrode pair is used to measure a lactate level (second biological value). Moreover, the present invention is not limited to the configuration for performing a hematocrit correction. The present invention may have any configuration as long as the test electrode pair and another electrode pair are used to measure the first biological value and the second biological value, respectively. For example, a reducing substance can be measured as the first biological value.

The above description refers to the configuration including the pair of hematocrit electrodes (test electrode pair) and the pair of glucose electrodes (another electrode pair). However, the present invention may have at least one test electrode pair. For example, the present invention may also have a total of three electrode pairs including one test electrode pair.

In the above description, as shown in the flow chart of FIG. 24, the step of measuring an electrical response to the detection signal is followed by the step of measuring a hematocrit level (first biological value) using the pair of hematocrit electrodes (test electrode pair). However, the present invention is not limited thereto. For example, the step of measuring a hematocrit level using the test electrode pair may be performed before the step of applying the detection signal to the test electrode pair. In FIG. 24, the step S2 and the step S3 may be performed after the step S8. Moreover, the step of measuring an electrical response to the detection signal and the step of determining the presence or absence of the reagent on the test electrode pair may be successively performed before or after the step of measuring a hematocrit level using the test electrode pair. In FIG. 24, the step S2, the step S3, and the step S9 may be successively performed before or after the step S6 and the step S7.

In the above description, the direct voltage signal is used as the detection signal. However, the present invention is not limited thereto, and may use an alternating voltage signal or other voltage signals composed of a non-sinusoidal wave such as a sawtooth wave.

As described in the above embodiments, the direct voltage signal or the alternating voltage signal is preferred as the detection signal because it is easy to perform the step of applying the detection signal and the step of determining the presence or absence of the reagent.

In the above description, the pair of hematocrit electrodes (test electrode pair) is located upstream of the flow path, and the pair of glucose electrodes (another electrode pair) is located downstream of the flow path in the analytical device. However, the present invention is not limited thereto. The pair of glucose electrodes (another electrode pair) may be located upstream of the flow path, and the pair of hematocrit electrodes (test electrode pair) may be located downstream of the flow path.

In the above description, the pair of hematocrit electrodes and the pair of glucose electrodes are provided in one flow path. However, in the analytical device of the present invention, the shape of the flow path is not limited thereto, as long as the test electrode pair is located at the position where the reagent placed on another electrode pair can be scattered. For example, the present invention can also be applied to the analytical device having a Y-shape bifurcated flow path.

The invention may be embodied in other forms without departing from the essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

Industrial Applicability

The present invention is useful for a measuring method and a measuring apparatus that can detect a defective analytical device due to the scattering of a reagent.

Description of Reference Numerals

| 1 | Blood glucose level meter (measuring apparatus) |
| 1a | Main body (measuring device) of blood glucose level meter |
| 2 | Analytical device (measuring device) |
| 11 | Pair of hematocrit electrodes (test electrode pair) |
| 12 | Pair of glucose electrodes (another electrode pair) |
| 15 | Dropped reagent |
| 31a | First measuring unit (another measuring unit) |
| 31b | Second measuring unit (measuring unit) |
| 33 | Control unit |
| R | Flow path |

**Claims**

1. A method for measuring a target component of a biological sample with a reagent (15), by using an analytical device (2) comprising at least one test electrode pair (11) located in a flow path (R) of the sample and not provided with the reagent (15) and another electrode pair (12) located in the flow path (R) of the sample and provided with the reagent (15), the method comprising the following steps of:

   applying a detection signal to the at least one test electrode pair (11);
   measuring an electrical response to the detection signal in the test electrode pair (11);
   determining a presence or absence of the reagent (15) on the test electrode pair (11) based on the measured electrical response;
   measuring a first biological value by using the test electrode pair (11) either before the step of applying the detection signal or after the step of measuring the electrical response;
   the test electrode pair (11), which is not provided with the reagent (15), is used in the step of measuring a first biological value; and

   measuring a second biological value by applying a measurement signal to the another electrode pair (12) on which the reagent (15) is placed, while the sample reacts with the reagent (15) .

2. The measuring method according to claim 1, wherein the presence or absence of the reagent (15) on the test electrode pair (11) is determined by comparing the measured electrical response with a known value in the step of determining the presence or absence of the reagent (15).

3. The measuring method according to claim 1 or 2, wherein a current value is measured as the electrical response to the detection signal in the step of measuring the electrical response.

4. The measuring method according to claim 3, wherein the first biological value is a hematocrit level and the second biological value is a glucose level, and the measuring method further comprises a step of correcting the measured glucose level using the measured hematocrit level.

5. An apparatus (1) configured to measure a target component of a biological sample with a reagent (15), comprising:

   a measuring unit (31b) configured to measure an electrical response to a detection signal applied to at least one test electrode pair (11);
   a control unit (33) configured to determine a presence or absence of the reagent (15) on the test electrode pair (11) based on the measured electrical response;
   another measuring unit (31a) configured to measure an electrical response to a measurement signal applied to another electrode pair (12) on which the reagent is placed; wherein
   an analytical device (2) comprising the another electrode pair (12) located in a flow path (R) of the sample and provided with the reagent (15), and the test electrode pair (11) located in the flow path (R) of the sample and not provided with the reagent (15);
   the measuring unit (31b) is configured to measure an electrical response to a measurement signal applied to the test electrode pair (11), and the control unit (33) is configured to determine a first biological value based on the measured electrical response to the measurement signal, and
   the control unit (33) configured to determine a second biological value based on the electrical response to the measurement signal measured by the another measuring unit (31a).

6. The measuring apparatus (1) according to claim 5, wherein the control unit (33) is configured to determine the presence or absence of the reagent (15) on the test electrode pair (11) by comparing the measured electrical response with a known value.

7. The measuring apparatus (1) according to claim 6, wherein the another electrode pair (12) and the test electrode pair (11) of the analytical device (2) are located at positions within a range of a predetermined distance in the same flow path (R) of the sample.

8. The measuring apparatus (1) according to any one of claims 5 to 7, wherein when the detection signal is applied to the test electrode pair (11), one electrode (5b) of the test electrode pair (11) that is closer to the another electrode pair (12) serves as a working electrode (5b) and the other electrode (8b) that is further from the another electrode pair (12) serves as a counter electrode (8b).

9. The measuring apparatus according to any one of claims 5 to 8, wherein the first biological value is a hematocrit level and the second biological value is a glucose level, and the control unit (33) configured to correct the determined glucose level using the determined hematocrit level.

**Patentansprüche**

1. Verfahren zum Messen einer Zielkomponente einer biologischen Probe mit einem Reagenz (15) unter Verwendung einer analytischen Vorrichtung (2), die zumindest ein Testelektrodenpaar (11), das sich in einem Strömungsweg (R) der Probe befindet und nicht mit dem Reagenz (15) versehen ist, und ein anderes Elektrodenpaar (12), das sich in dem Strömungsweg (R) der Probe befindet und mit dem Reagenz (15) versehen ist, umfasst,
   wobei das Verfahren die folgenden Schritte umfasst:

   Anlegen eines Detektionssignals an das zumindest eine Testelektrodenpaar (11);
   Messen einer elektrischen Antwort auf das Detektionssignal in dem Testelektrodenpaar (11);
   Bestimmen einer Anwesenheit oder Abwesenheit des Reagenzes (15) auf dem Testelektrodenpaar (11) basierend auf der gemessenen elektrischen Antwort;
   Messen eines ersten biologischen Wertes unter Verwendung des Testelektrodenpaars (11) entweder vor dem Schritt des Anlegens des Detektionssignals oder nach dem Schritt des Messens der elektrischen Antwort;
   wobei das Testelektrodenpaar (11), das nicht mit dem Reagenz (15) versehen ist, in dem Schritt des Messens eines ersten biologischen Wertes verwendet wird; und
   Messen eines zweiten biologischen Wertes durch Anlegen eines Messsignals an das andere Elektrodenpaar (12), auf dem das Reagenz (15) platziert ist, während die Probe auf das Reagenz (15) reagiert.

2. Messverfahren nach Anspruch 1, wobei die Anwesenheit oder Abwesenheit des Reagenzes (15) auf dem Testelektrodenpaar (11) durch Vergleichen der gemessenen elektrischen Antwort mit einem bekannten Wert in dem Schritt des Bestimmens der Anwesenheit oder Abwesenheit des Reagenzes (15) bestimmt wird.

3. Messverfahren nach Anspruch 1 oder 2, wobei ein Stromwert als die elektrische Antwort auf das Detektionssignal in dem Schritt des Messens der elektrischen Antwort gemessen wird.

4. Messverfahren nach Anspruch 3, wobei der erste biologische Wert ein Hämatokritspiegel ist und der zweite biologische Wert ein Glucosespiegel ist und das Messverfahren weiter einen Schritt des Korrigierens des gemessenen Glucosespiegels unter Verwendung des gemessenen Hämatokritspiegels umfasst.

5. Messeinrichtung (1), die konfiguriert ist, um eine Zielkomponente einer biologischen Probe mit einem Reagenz (15) zu messen, umfassend:

   eine Messeinheit (31b), die konfiguriert ist, um eine elektrische Antwort auf ein Detektionssignal, das an zumindest ein Testelektrodenpaar (11) angelegt ist, zu messen;
   eine Steuereinheit (33), die konfiguriert ist, um eine Anwesenheit oder Abwesenheit des Reagenzes (15) auf dem Testelektrodenpaar (11) basierend auf der gemessenen elektrischen Antwort zu bestimmen;
   eine andere Messeinheit (31a), die konfiguriert ist, um eine elektrische Antwort auf ein Messsignal, das an ein anderes Elektrodenpaar (12) angelegt ist, auf dem das Reagenz platziert ist, zu messen; wobei
   eine analytische Vorrichtung (2) das andere Elektrodenpaar (12), das sich in einem Strömungsweg (R) der Probe befindet und mit dem Reagenz (15) versehen ist, und das Testelektrodenpaar (11), das sich in dem Strömungsweg (R) der Probe befindet und nicht mit dem Reagenz (15) versehen ist, umfasst;
   die Messeinheit (31b) konfiguriert ist, um eine elektrische Antwort auf ein Messsignal, das an das Testelektrodenpaar (11) angelegt ist, zu messen, und die Steuereinheit (33) konfiguriert ist, um einen ersten biologischen Wert basierend auf der gemessenen elektrischen Antwort auf das Messsignal zu bestimmen, und die Steuereinheit (33) konfiguriert ist, um einen zweiten biologischen Wert basierend auf der elektrischen Antwort auf das von der anderen Messeinheit (31a) gemessene Messsignal zu bestimmen.

6. Messeinrichtung (1) nach Anspruch 5, wobei die Steuereinheit (33) konfiguriert ist, um die Anwesenheit oder Abwesenheit des Reagenzes (15) auf dem Testelektrodenpaar (11) durch Vergleichen der gemessenen elektrischen Antwort mit einem bekannten Wert zu bestimmen.

7. Messeinrichtung (1) nach Anspruch 6, wobei sich das andere Elektrodenpaar (12) und das Testelektrodenpaar (11) der analytischen Vorrichtung (2) in Positionen innerhalb eines Bereichs einer vorbestimmten Entfernung in dem gleichen Strömungsweg (R) der Probe befinden.

8. Messeinrichtung (1) nach einem der Ansprüche 5 bis 7, wobei, wenn das Detektionssignal an das Testelektrodenpaar (11) angelegt ist, eine Elektrode (5b) des Testelektrodenpaars (11), die sich näher an dem anderen Elektrodenpaar (12) befindet, als eine Arbeitselektrode (5b) dient, und die andere Elektrode (8b), die sich weiter weg von dem anderen Elektrodenpaar (12) befindet, als eine Gegenelektrode (8b) dient.

9. Messeinrichtung (1) nach einem der Ansprüche 5 bis 8, wobei der erste biologische Wert ein Hämatokritspiegel ist und der zweite biologische Wert ein Glucosespiegel ist, und die Steuereinheit (33) konfiguriert ist, um den bestimmten Glucosespiegel unter Verwendung des bestimmten Hämatokritspiegels zu korrigieren.

**Revendications**

1. Procédé de mesure d'un composant cible d'un échantillon biologique avec un réactif (15), en utilisant un dispositif d'analyse (2) comprenant au moins une paire d'électrodes d'essai (11) situées dans un circuit d'écoulement (R) de l'échantillon et ne recevant pas le réactif (15) et une autre paire d'électrodes (12) situées dans le circuit d'écoulement (R) de l'échantillon et recevant le réactif (15),
le procédé comprenant les étapes suivantes de :

   application d'un signal de détection à l'au moins une paire d'électrodes d'essai (11) ;
   mesure d'une réponse électrique au signal de détection dans la paire d'électrodes d'essai (11) ;
   détermination d'une présence ou une absence du réactif (15) sur la paire d'électrodes d'essai (11) sur la base de la réponse électrique mesurée ;

mesure d'une première valeur biologique en utilisant la paire d'électrodes d'essai (11) soit avant l'étape d'application du signal de détection, soit après l'étape de mesure de la réponse électrique ;

la paire d'électrodes d'essai (11), qui ne reçoit pas le réactif (15), est utilisée dans l'étape de mesure d'une première valeur biologique ; et

mesure d'une seconde valeur biologique en appliquant un signal de mesure à l'autre paire d'électrodes (12) sur laquelle le réactif (15) est placé, tandis que l'échantillon réagit avec le réactif (15).

2. Procédé de mesure selon la revendication 1, dans lequel la présence ou l'absence du réactif (15) sur la paire d'électrodes d'essai (11) est déterminée en comparant la réponse électrique mesurée à une valeur connue dans l'étape de détermination de la présence ou de l'absence du réactif (15).

3. Procédé de mesure selon la revendication 1 ou 2, dans lequel une valeur instantanée est mesurée comme la réponse électrique au signal de détection dans l'étape de mesure de la réponse électrique.

4. Procédé de mesure selon la revendication 3, dans lequel la première valeur biologique est un niveau d'hématocrites et la seconde valeur biologique est un niveau de glucose, et le procédé de mesure comprend en outre une étape de correction du niveau de glucose mesuré en utilisant le niveau d'hématocrites mesuré.

5. Appareil de mesure (1) configuré pour mesurer un composant cible d'un échantillon biologique avec un réactif (15), comprenant :

une unité de mesure (31b) configurée pour mesurer une réponse électrique à un signal de détection appliqué à au moins une paire d'électrodes d'essai (11) ;

une unité de commande (33) configurée pour déterminer une présence ou une absence du réactif (15) sur la paire d'électrodes d'essai (11) sur la base de la réponse électrique mesurée ;

une autre unité de mesure (31a) configurée pour mesurer une réponse électrique à un signal de mesure appliqué à une autre paire d'électrodes (12) sur laquelle le réactif est placé ; dans lequel un dispositif d'analyse (2) comprenant l'autre paire d'électrodes (12) situées dans un circuit d'écoulement (R) de l'échantillon et recevant le réactif (15), et la paire d'électrodes d'essai (11) situées dans le circuit d'écoulement (R) de l'échantillon et ne recevant pas le réactif (15) ;

l'unité de mesure (31b) est configurée pour mesurer une réponse électrique à un signal de mesure appliqué à la paire d'électrodes d'essai (11), et l'unité de commande (33) est configurée pour déterminer une première valeur biologique sur la base de la réponse électrique mesurée au signal de mesure, et

l'unité de commande (33) configurée pour déterminer une seconde valeur biologique sur la base de la réponse électrique au signal de mesure mesuré par l'autre unité de mesure (31a).

6. Appareil de mesure (1) selon la revendication 5, dans lequel l'unité de commande (33) est configurée pour déterminer la présence ou l'absence du réactif (15) sur la paire d'électrodes d'essai (11) en comparant la réponse électrique mesurée à une valeur connue.

7. Appareil de mesure (1) selon la revendication 6, dans lequel l'autre paire d'électrodes (12) et la paire d'électrodes d'essai (11) du dispositif d'analyse (2) sont situées à des positions dans une plage d'une distance prédéterminée dans le même circuit d'écoulement (R) de l'échantillon.

8. Appareil de mesure (1) selon l'une quelconque des revendications 5 à 7, dans lequel lorsque le signal de détection est appliqué à la paire d'électrodes d'essai (11), une électrode (5b) de la paire d'électrodes d'essai (11) qui est plus proche de l'autre paire d'électrodes (12) sert d'électrode de travail (5b) et l'autre électrode (8b) qui est plus éloignée de l'autre paire d'électrodes (12) sert de contre-électrode (8b).

9. Appareil de mesure (1) selon l'une quelconque des revendications 5 à 8, dans lequel la première valeur biologique est un niveau d'hématocrites et la seconde valeur biologique est un niveau de glucose, et l'unité de commande (33) configurée pour corriger le niveau de glucose déterminé en utilisant le niveau d'hématocrites déterminé.

FIG. 1

EP 2 871 471 B1

5a 6a 4a 4

5

6

7

8

8a 7a 3 9a 9

4b
9b
10a

10b
9b

10c An 12 11

I

**FIG. 2**

FIG. 3

FIG. 4

FIG. 5

FIG. 6

FIG. 7

FIG. 8

FIG. 9

FIG. 10A

FIG. 10B

FIG. 10C

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

```
                    ┌─────────────┐
                    │    Start    │
                    └──────┬──────┘
                           │
         ┌─────────────────────────────────┐
         │Bring sample into contact with    │～S1
         │        electrode pair            │
         └─────────────────┬───────────────┘
                           │
         ┌─────────────────────────────────┐
         │      Input detection signal      │～S2
         └─────────────────┬───────────────┘
                           │
         ┌─────────────────────────────────┐
         │  Measure response to detection   │～S3
         │            signal                │
         └─────────────────┬───────────────┘
                           │
         ┌─────────────────────────────────┐
         │  Input first signal (DC signal)  │～S4
         └─────────────────┬───────────────┘
                           │
         ┌─────────────────────────────────┐
         │      Measure first response      │～S5
         │        (current value)           │
         └─────────────────┬───────────────┘
                           │
         ┌─────────────────────────────────┐
         │      Input second signal         │～S6
         │        (pulse signal)            │
         └─────────────────┬───────────────┘
                           │
         ┌─────────────────────────────────┐
         │     Measure second response      │～S7
         │          (peak value)            │
         └─────────────────┬───────────────┘
                           │
         ┌─────────────────────────────────┐
         │           Correction             │～S8
         └─────────────────┬───────────────┘
                           │            S9
                        ◇─────────────◇
                   ╱  Determine          ╲   Present
                  ╱ presence or absence of ╲─────────┐
                  ╲    scattering          ╱         │
                   ╲─────────┬────────────╱          │
                           Absent                     │
         ┌─────────────────────────────────┐   ┌──────────────────┐
         │           Output                 │～S10│ Display anomaly  │～S11
         └─────────────────┬───────────────┘   └────────┬─────────┘
                           │◄────────────────────────────┘
                    ┌──────────────┐
                    │     End      │
                    └──────────────┘
```

FIG. 24

FIG. 25

FIG. 26

FIG. 27A

FIG. 27B

FIG. 27C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110139634 A1
- EP 0246031 A1